# EUROPEAN PATENT APPLICATION

(11) **EP 4 575 957 A1**
(43) Date of publication of application: **25.06.2025**
(21) Application number: 23854889.5
(22) Date of filing: 15.08.2023
(51) Int. Cl.: G06Q 10/30, G06Q 50/10

(54) **TRANSACTION MANAGEMENT DEVICE, TRANSACTION MANAGEMENT SYSTEM, USER TERMINAL, TRANSACTION MANAGEMENT METHOD, DISPLAY CONTROL METHOD, AND PROGRAM**

(30) Priority: 17.08.2022 JP 2022130089; 10.08.2023 JP 2023131656
(71) Applicant: Mitsubishi Materials Corporation, Tokyo 100-8117 (JP)
(72) Inventor: IWATAKI Masako, Tokyo 100-8117 (JP); TOYOZUMI Keisuke, Tokyo 100-8117 (JP); SAITO Kunihiro, Tokyo 100-8117 (JP); OSHIDA Yutaro, Tokyo 100-8117 (JP)
(74) Representative: Gille Hrabal Partnerschaftsgesellschaft mbB Patentanwälte
(86) International application number: PCT/JP2023/029500
(87) International publication number: WO 2024/038855

(57) **Abstract**

There is provided a transaction management device including an information acquisition means, update means, and a transmission means. The information acquisition means acquires information on a progress status in each step including a content evaluation process of a transaction pertaining to a recycled raw material containing a valuable metal delivered by a user. The update means updates status information according to each step based on the information on the progress status. The transmission means transmits screen information including the status information to a user terminal device owned by the user, in response to a viewing request from the user terminal device.

## Description

### TECHNICAL FIELD

The present invention relates to a transaction management device, a transaction management system, a user terminal, a transaction management method, a display control method, and a program.

### BACKGROUND ART

In the related art, efforts have been made to carry out recycling to recover valuable metals such as gold and silver from scraps of electronic apparatuses and the like. In such recycling, a price is paid for the recycled raw material delivered by the recovery business operator, that is, a transaction is carried out.

As a related technology, a financial transaction system, which transmits metal market data to a plurality of operation terminals and at the same time, transmits history information of estimation information transmitted between the operation terminals in response to a request from the operation terminal, is disclosed (for example, the following Patent Document 1).

In a transaction pertaining to recycling, a user who is a recovery business operator delivers a recycled raw material to a recycling processing operator such as a smelter. The recycling processing operator evaluates the content of the valuable metal contained in the recycled raw material. The content evaluation process for the valuable metal includes, for example, a plurality of steps such as weight measurement, crushing, reduction, and sampling, as well as moisture measurement and analysis of contained metals for the raw material. Therefore, it may take about 2 to 6 weeks from the delivery to the determination of the evaluation.

### Citation List

### Patent Document

Patent Document 1: Japanese Patent No. 6989193

### SUMMARY OF INVENTION

### Technical Problem

However, in the related art, since the user may not clearly know at what step the delivered recycled raw material is in the content evaluation process, there is such a problem that the transaction pertaining to the recycled raw material may not be clear to the user.

In consideration of the above circumstances, an object of the present invention is to provide a technology for clarifying a transaction pertaining to a recycled raw material. Solution to problem

A transaction management device according to an aspect of the present invention is a transaction management device including;
information acquisition means configured to acquire information on a progress status in each step including a content evaluation process of a transaction pertaining to a recycled raw material containing a valuable metal delivered by a user,
update means configured to update status information according to each step based on the information on the progress status, and
transmission means configured to transmit screen information including the status information to a user terminal device owned by the user, in response to a viewing request from the user terminal device.

A transaction management system according to an aspect of the present invention is a transaction management system including
a transaction management device, and
a user terminal device provided by a customer,
in which the transaction management device includes information acquisition means configured to acquire information on a progress status in each step including a content evaluation process of a transaction pertaining to a recycled raw material containing a valuable metal delivered by a user, update means configured to update status information according to each step based on the information on the progress status, and transmission means configured to transmit screen information including the status information to a user terminal device owned by the user, in response to a viewing request from the user terminal device, and
the user terminal device includes request means configured to make the viewing request, reception means configured to receive the screen information from the transaction management device in response to the viewing request, and display control means configured to cause a display unit to display the screen information received by the reception means.

A user terminal device according to an aspect of the present invention is a user terminal device including
request means configured to make a viewing request for screen information to a transaction management device, the screen information including status information according to each step including a content evaluation process of a transaction pertaining to a recycled raw material containing a valuable metal delivered by a user, where the status information is updated based on information on a progress status in each step,
reception means configured to receive the screen information from the transaction management device in response to the viewing request, and
display control means configured to cause a display unit to display the screen information received by the reception means.

A transaction management method according to an aspect of the present invention is a transaction management method, for executing a process by a computer of a transaction management device, the process including
an information acquisition step of acquiring information on a progress status in each step including a content evaluation process of a transaction pertaining to a recycled raw material containing a valuable metal delivered by a user,
an update step of updating status information according to each step based on the information on the progress status, and
a transmission step of transmitting screen information including the status information to a user terminal device owned by the user, in response to a viewing request from the user terminal device.

A display control method, for executing a process by a computer of a user terminal device, the process including
a request step of making a viewing request for screen information to a transaction management device, the screen information including status information according to each step including a content evaluation process of a transaction pertaining to a recycled raw material containing a valuable metal delivered by a user, where the status information is updated based on information on a progress status in each step,
a reception step of receiving the screen information from the transaction management device in response to the viewing request, and
a display control step of causing a display unit to display the screen information received in the reception step.

A program that causes a computer to function as a transaction management device, the program causing the computer to function as
information acquisition means configured to acquire information on a progress status in each step including a content evaluation process of a transaction pertaining to a recycled raw material containing a valuable metal delivered by a user,
update means configured to update status information according to each step based on the information on the progress status, and
transmission means configured to transmit screen information including the status information to a user terminal device owned by the user, in response to a viewing request from the user terminal device.

A program that causes a computer to function as a user terminal device, the program causing the computer to function as
request means configured to make a viewing request for screen information to a transaction management device, the screen information including status information according to each step including a content evaluation process of a transaction pertaining to a recycled raw material containing a valuable metal delivered by a user, where the status information is updated based on information on a progress status in each step,
reception means configured to receive the screen information from the transaction management device in response to the viewing request, and
display control means configured to cause a display unit to display the screen information received by the reception means.

### Advantageous Effects of Invention

According to the present invention, it is possible to clarify a transaction pertaining to a recycled raw material.

### BRIEF DESCRIPTION OF DRAWINGS

[FIG. 1] An explanatory view showing a network configuration of a transaction management system 1 according to an embodiment.
[FIG. 2] A block view showing an example of a hardware configuration of a transaction management server 100.
[FIG. 3] A block view showing an example of a hardware configuration of a factory terminal device 110 and a user terminal device 120.
[FIG. 4A] An explanatory view showing an example of transaction information stored in a transaction management DB 101.
[FIG. 4B] An explanatory view showing an example of transaction information stored in the transaction management DB 101.
[FIG. 4C] An explanatory view showing an example of transaction information stored in the transaction management DB 101.
[FIG. 5] An explanatory view showing an example of a reservation screen displayed on the user terminal device 120.
[FIG. 6] A block view showing an example of a functional configuration of the transaction management system 1.
[FIG. 7] An explanatory view showing an example of a viewing screen indicating that a confirmation notification pertaining to the weight has been carried out.
[FIG. 8] An explanatory view showing an example of a viewing screen indicating that a confirmation notification pertaining to a change in a sampling method has been carried out.
[FIG. 9] An explanatory view showing an example of a transaction list viewing screen displayed on the user terminal device 120.
[FIG. 10] An explanatory view showing another screen example of the transaction list viewing screen.
[FIG. 11] An explanatory view showing an example of a detailed viewing screen displayed on the user terminal device 120.
[FIG. 12] A sequence view showing a flow of processing in the transaction management system 1.
[FIG. 13] A flowchart showing an example of processing to be carried out by the user terminal device 120.
[FIG. 14] A flowchart showing an example of processing pertaining to an update of a status, which is carried out by the transaction management server 100.
[FIG. 15] A flowchart showing an example of processing pertaining to an update of a status, which is carried out by the transaction management server 100.
[FIG. 16] A flowchart showing an example of processing pertaining to the transmission of screen information, which is carried out by the transaction management server 100.
[FIG. 17A] A view showing a state in a case where a recycled raw material is unpacked from a container of a transport vehicle.
[FIG. 17B] A view showing a state in a case where a raw material is packed in a bag (in a flexible container bag) is unpacked.
[FIG. 18] A view showing an example of the installation of an imaging apparatus in an unpacking area 1714.
[FIG. 19] An explanatory view showing an example of a viewing screen including an unpacking image.

### DESCRIPTION OF EMBODIMENTS

### (Embodiment)

### (Network configuration of transaction management system 1)

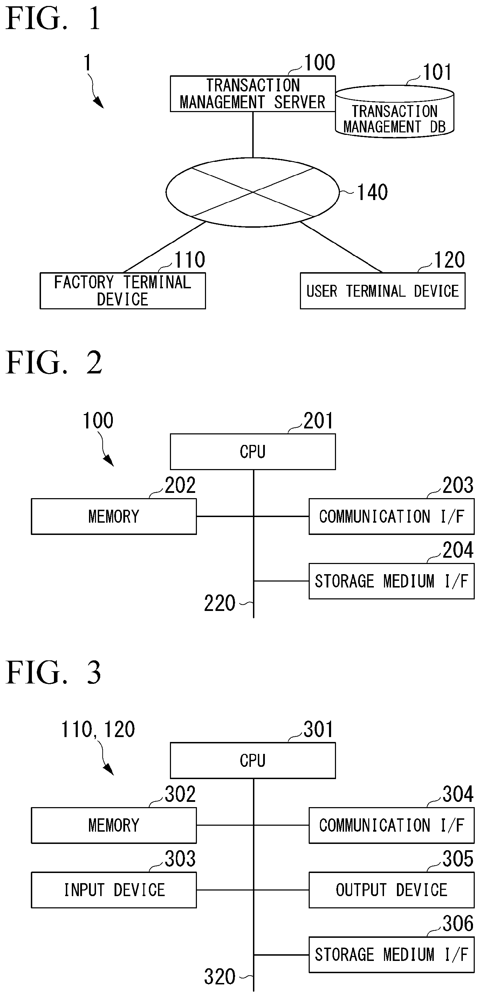

FIG. 1 is an explanatory view showing a network configuration of a transaction management system 1 according to an embodiment. As shown in FIG. 1, the transaction management system 1 includes a transaction management server 100, a factory terminal device 110, and a user terminal device 120. Each of the devices is communicably connected by a network 140 (for example, a network using TCP/IP or a mobile network). In addition, each of the devices is a computer device including a central processing unit (CPU), a read only memory (ROM), a random access memory (RAM), a communication unit, and the like.

### (Transaction management server 100)

The transaction management server 100 is an example of a transaction management device. The transaction management server 100 manages a transaction of a valuable metal, which is carried out between a user who is a recovery business operator and a recycling factory (recycling processing operator) such as a smelter. In the transaction, the user delivers a recycled raw material (scraps) to a recycling factory. The recycled raw material may be directly brought in the recycling factory by the user or may be delivered to the recycling factory through a third party.

The recycled raw material contains a valuable metal. The valuable metal includes, for example, gold, silver, and copper. The user obtains the price according to the valuable metal contained in the recycled raw material from the recycling factory. The price of the valuable metal is determined based on the evaluation result after going through the content evaluation process for the valuable metal in the recycling factory. The content evaluation process includes a plurality of steps such as weight measurement, crushing, reduction, and sampling, as well as moisture measurement and analysis of contained metals for the raw material. The valuable metal is a metal that can be expected to be a target of a transaction. Depending on the evaluation results, the recycled raw material may not contain valuable metals.

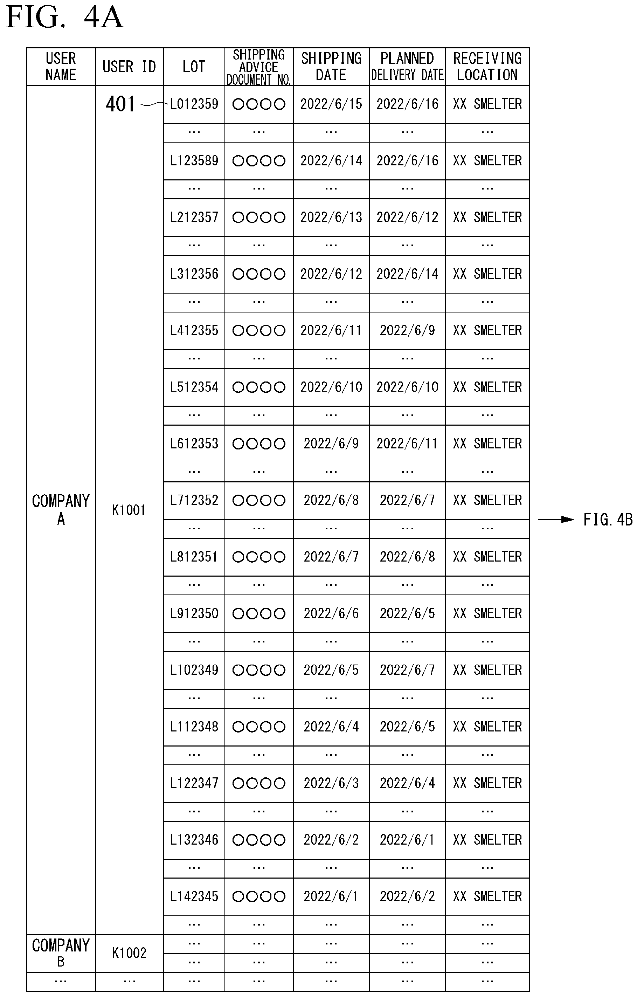

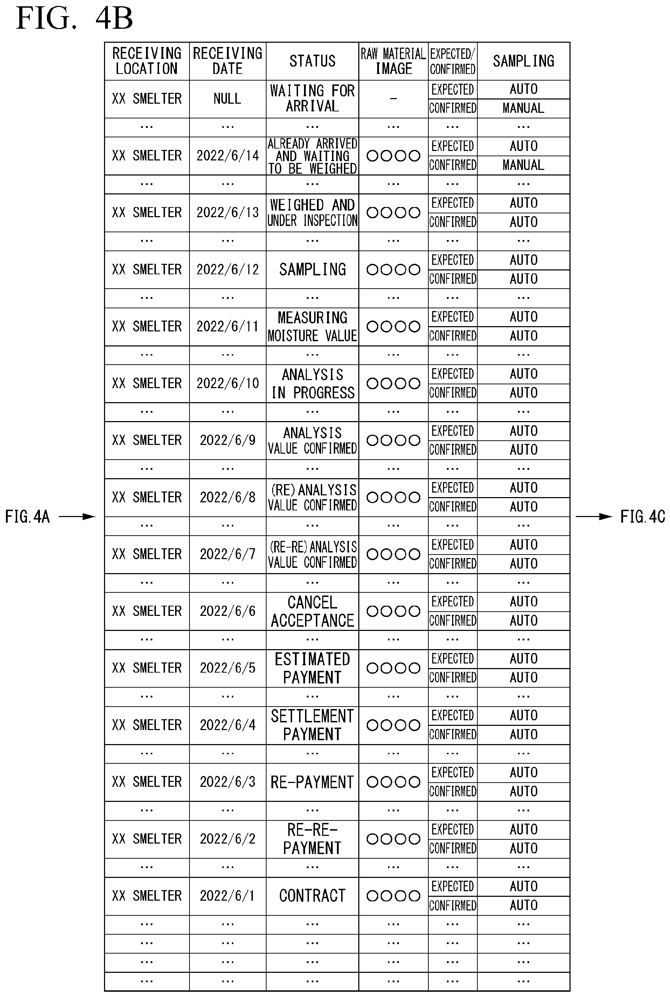

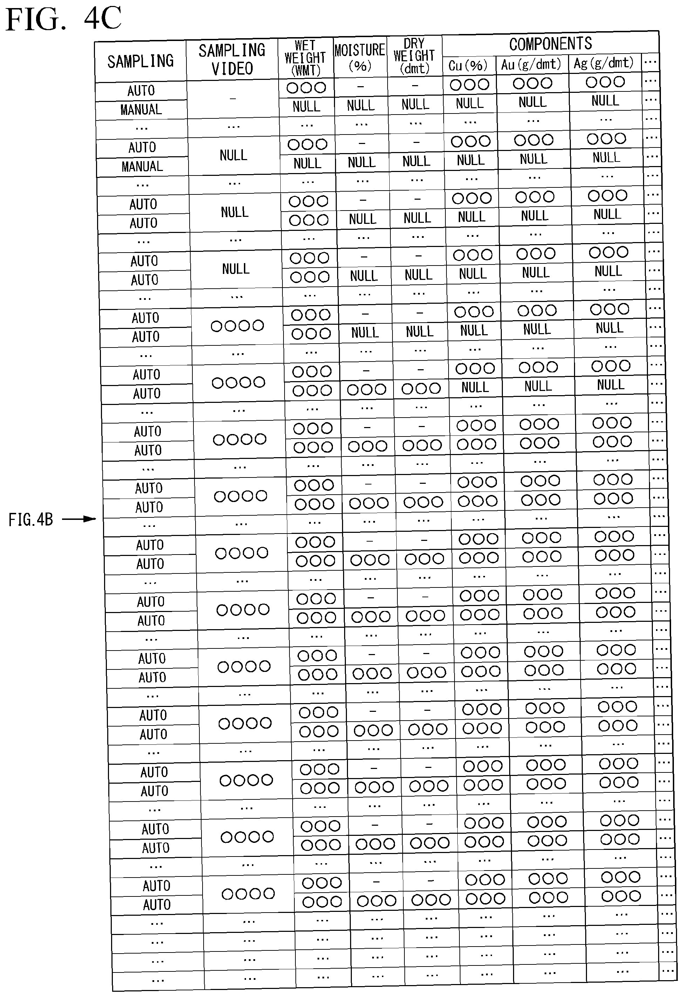

The transaction management server 100 includes a transaction management database (DB) 101 (an example of the registration means) and manages transaction information for each user based on the contents stored in the transaction management DB 101. The transaction information includes in addition to various schedules for the planned delivery date, the amount to be delivered, and the like of the recycled raw material that is delivered to the recycling factory, the evaluation result in the content evaluation process, and the like. It is noted that the details of the transaction management DB 101 will be described later with reference to FIG. 4A, FIG 4B, and FIG. 4C.

### (Factory terminal device 110)

The factory terminal device 110 is disposed in a work area of each step in the recycling factory. That is, the factory terminal device 110 is present such that the number thereof is as many as the number of the work areas. The factory terminal device 110 is, for example, a computer device such as a personal computer, a smartphone, or a tablet terminal. The factory terminal device 110 accepts various operations from the work staff (factory staff) in each step pertaining to the transaction.

For example, the factory terminal device 110 accepts an input operation indicating the start of each step, various input operations in each step, an input operation of a LOT number assigned for each raw material, or the like. The LOT number is identification information assigned for each recycled raw material that has been brought in the recycling factory. The LOT number is represented by a raw material identification code such as a QR code (registered trademark). The raw material identification code is appended by being linked to the recycled raw material and is read by a reader such as a scanner or a camera. The work staff carries out an operation of reading the raw material identification code using the reader. As a result, the factory terminal device 110 is capable of acquiring the raw material identification code.

The factory terminal device 110 transmits the input information accepted in response to the operation of the work staff to the transaction management server 100. The transaction management server 100 registers the input information received from the factory terminal device 110 in the transaction management DB 101.

### (User terminal device 120)

The user terminal device 120 is owned by a user. The user terminal device 120 is present such that the number thereof is as many as the number of users. The user terminal device 120 is, for example, a computer device such as a personal computer, a smartphone, or a tablet terminal. The user terminal device 120 accepts a reservation pertaining to a transaction of the recycled raw material in response to, for example, an operation of the user, and transmits the transaction information indicating the accepted reservation to the transaction management server 100. The transaction management server 100 registers the transaction information received from the user terminal device 120 in the transaction management DB 101.

### (Hardware configuration of transaction management server 100)

FIG. 2 is a block view showing an example of a hardware configuration of a transaction management server 100. In FIG. 2, the transaction management server 100 includes a CPU 201, a memory 202, a communication (I/F) (interface) 203, and a storage medium I/F 204. Each of the parts is connected to a bus 220.

The CPU 201 controls the entire transaction management server 100. The memory 202 has, for example, a ROM, a RAM, and a flash ROM. For example, the ROM or the flash ROM stores various programs such as a transaction management program according to the present embodiment. The RAM is used as a work area of the CPU 201. The program stored in the memory 202 is loaded into the CPU 201, whereby the CPU 201 is allowed to execute the coded processing.

The communication I/F 203 is connected to the network 140 such as the Internet through a communication line, and it is connected to another device (for example, the factory terminal device 110 or the user terminal device 120) through the network 140. In addition, the communication I/F 203 controls an interface between the network 140 and the inside of the device itself, thereby controlling the input and output of data from other devices.

The storage medium I/F 204 controls the reading and writing of data with respect to a storage medium such as a universal serial bus (USB) flash memory, a solid state drive (SSD), a magnetic disk, or an optical disk, or the transaction management DB 101, according to the control of the CPU 201.

### (Hardware configuration of factory terminal device 110 and user terminal device 120)

FIG. 3 is a block view showing an example of a hardware configuration of a factory terminal device 110 and a user terminal device 120. In FIG. 3, each of the factory terminal device 110 and the user terminal device 120 includes a CPU 301, a memory 302, an input device 303, a communication I/F 304, an output device 305, and a storage medium I/F 306. Each of the parts is connected by a bus 320.

The CPU 301 controls the entirety of the factory terminal device 110 and the user terminal device 120. The memory 302 has, for example, a ROM, a RAM, and a flash ROM. For example, the ROM or the flash ROM stores various programs such as a display control program according to the present embodiment.

The RAM is used as a work area of the CPU 301. The program stored in the memory 302 is loaded into the CPU 301, whereby the CPU 301 is allowed to execute the coded processing.

The input device 303 is a touch panel or an operation button. The input device 303 includes a keyboard, a mouse, a microphone, or the like. In addition, the input device includes a scanner or a camera. A scanner or a camera is capable of reading various codes such as a QR code. The reading method for the scanner is, for example, a laser method, a CCD method, or the like. A charge coupled device (CCD) camera or a complementary metal oxide semiconductor (CMOS) camera is used as the camera.

The communication I/F 304 is connected to the network 140 such as the Internet through a communication line, and it is connected to another device (for example, the transaction management server 100) through the network 140. In addition, the communication I/F 304 controls an interface between the network 140 and the inside of the device itself, thereby controlling the input and output of data from other devices.

The output device 305 includes a display, a speaker, or the like. The display displays an image and it may be, for example, a touch panel type display. The speaker outputs a sound.

The storage medium I/F 306 controls the reading and writing of data with respect to a storage medium not shown in the drawings, such as a USB flash memory, an SSD, a magnetic disk, or an optical disk, according to the control of the CPU 301.

### (Example of transaction information stored in transaction management DB 101)

FIG. 4A, FIG. 4B, and FIG. 4C are explanatory views showing an example of transaction information stored in a transaction management DB 101. It is noted that although FIG. 4A, FIG. 4B, and FIG. 4C are described by being divided into three views due to the relationship with the size of the paper surface, they can be represented in one view. The transaction management DB 101 is realized by the memory 202.

In FIG. 4A, FIG. 4B, and FIG. 4C, the transaction management DB 101 includes each of items of a "user name", a "user ID", a "LOT", a "shipping advice document number", a "shipping date", a "planned delivery date", a "receiving location", a "receiving date", a "status", a "raw material image", an "expected/confirmed", a "sampling", a "sampling video", a "wet weight", a "moisture", a "dry weight", and a "component". Each item is input based on an operation by the work staff on the factory terminal device 110 or based on an operation by the user on the user terminal device 120. By inputting the predetermined information to each item, the transaction information 401 is stored in the transaction management DB 101 for each transaction.

Hereinafter, each item of the transaction management DB 101 will be described.

The "user name" is a name of a user (for example, a company name, a branch name, or an office name).

The "user ID" is identification information that is capable of uniquely specifying a user who is the recovery business operator.

The "LOT" is identification information for identifying a transaction pertaining to a recycled raw material delivered by the user. The "LOT" is assigned for each transaction. Therefore, in a case where the same type of recycled raw material has been brought in a plurality of containers, the same LOT is assigned to the recycled raw materials in the plurality of containers, whereas in a case where the recycled raw material is brought in one container, the LOT is assigned to the valuable recycling in one container.

The "shipping advice document number" is an identification number for identifying a shipping advice document issued before shipping. The shipping advice document is a document or electronic data in which the details of the accepted reservation, the ask items such as the method of shipping, and the like are described based on the reservation pertaining to the transaction of the recycled raw material.

The "shipping date" is a date on which the user ships the recycled raw material.

The "planned delivery date" is a planned date on which the user delivers the recycled raw material to the recycling factory.

The "receiving location" is a smelter (recycling factory) where the recycled raw material is received.

The "receiving date" is a date on which the recycling factory has received the recycled raw material.

The "status" indicates a step pertaining to the transaction of the recycled raw material. There are, for example, 15 kinds of "statuses", and in the drawing, 15 kinds of statuses are shown for convenience of description. Details of the "status" will be described later.

"Expected/confirmed" indicates information on the recycled raw material delivered by the user, and it indicates "expected" input by the user at the time of reservation and "confirmed" input by the work staff in the content evaluation process.

The "raw material image" is imaging data of the recycled raw material received by the recycling factory, and it is, for example, imaging data captured by the work staff at the start of the weighing.

"Sampling" indicates a sampling method. The "sampling" includes, for example, auto sampling and manual sampling.

In a case of sampling a part of the recycled raw material as a target of the evaluation step, a machine is used in the auto sampling, and a work staff carries out sampling with a shovel or the like in the manual sampling. In the manual sampling, the work staff carries out sampling at any portion, whereas in the auto sampling, a machine carries out sampling automatically and randomly. For example, in a case where a member having a large size and being difficult to be crushed with a machine is contained, the auto sampling may not be carried out, and in this case, the manual sampling is selected.

The "sampling" includes the sampling for "expected" and the sampling for "confirmed". The sampling for the "expected" is a sampling method desired by the user. The sampling for the "confirmed" is a sampling method determined at the recycling factory. The sampling for the "expected" may be different from the sampling for "confirmed".

For example, there is a case where the manual sampling is more suitable than the auto sampling although the user desires auto sampling. The case where the manual sampling is more suitable is, for example, a case where there is a lot of metal, in other words, a case where a pulverizer may be damaged. In such a case, the sampling method is changed by obtaining the consent of the user. It is noted that in the drawing, although two kinds of sampling methods are shown, the sampling method is not limited to two kinds, and three or more kinds may be used. For example, the sampling method for the auto sampling may be allowed to include a plurality of sampling methods such as high-quality sampling in which two-stage crushing and reduction are combined with eddy current sorting between the two-stage crushing, sampling in a large lot by four-shaft crushing, and sampling using a single shaft crusher or a Snyder sampler.

The "sampling video" is imaging data at the time of sampling, which is captured by the work staff in the sampling step.

The "wet weight" indicates the weight of the recycled raw material containing moisture. The "wet weight" includes the wet weight for "expected" and the wet weight for "confirmed". The wet weight for the "expected" is the wet weight input by the user. The sampling for the "confirmed" is an actual wet weight (evaluation result) weighed by the work staff. In a status in which the measurement of the wet weight has not been completed (a status of "waiting for arrival" and a status of "weighed and under inspection"), the wet weight for the "confirmed" in the transaction information 401 indicates "NULL".

The "moisture" indicates the moisture amount (evaluation result) contained in the recycled raw material. In a status in which the measurement of the moisture amount has not been completed (a status until "measuring moisture value"), the wet weight for the "confirmed" in the transaction information 401 indicates "NULL".

The "dry weight" indicates the weight (evaluation result) of the recycled raw material after drying. In a status in which the measurement of the moisture amount has not been completed (a status until "measuring moisture value"), the dry weight for the "confirmed" in the transaction information 401 indicates "NULL".

The "component" is a component (evaluation result) indicating each metal contained in the recycled raw material, and it is, for example, gold, silver, copper, or the like. In a status in which the analysis of the component has not been completed (a status until "analysis in progress"), the component for "confirmed" in the transaction information 401 indicates "NULL".

### (In regard to status)

Hereinafter, 15 kinds of statuses will be described.
(1) "Waiting for arrival": It indicates a period from the reservation until the recycled raw material is brought in the receiving location.
(2) "Already arrived and waiting to be weighed": It indicates that the receiving has been completed and the preparation for weighing is carried out by bringing the recycled raw material in the receiving location and carrying out unloading. In a case where the recycled raw material is brought in, a QR code (raw material identification code) indicating the identification information (for example, LOT) of the transaction (of the recycled raw material) is assigned. In each step, the factory terminal device 110 can read the raw material identification code and input the LOT number in response to the operation of the work staff. In addition, the input information in each step is associated with the LOT number and is transmitted to the transaction management server 100. It is noted that the raw material identification code may be any information that can identify the recycled raw material and may be information other than the LOT number.
(3) "Weighed and under inspection": It indicates that the weighing of the recycled raw material (including the wet weight) has been completed, and the recycled raw material is under inspection in the sampling yard.
(4) "Sampling": It indicates that the sampling of the recycled raw material is being carried out.
(5) "Measuring moisture value": It indicates that the sampling of the recycled raw material has been completed, and the moisture value is being measured.
(6) "Analysis in progress": It indicates that the measurement of the moisture value of the recycled raw material has been completed, and the analysis of the contained metal is being carried out.
(7) "Analysis value confirmed": It indicates that the analysis has been completed, and the analysis value has been confirmed.
(8) "Reanalysis value confirmed": It indicates that the reanalysis has been completed, and the reanalysis value has been confirmed.
(9) "Re-reanalysis value confirmed": It indicates that the re-reanalysis has been completed, and the re-reanalysis value has been confirmed.
(10) "Cancel acceptance": It indicates that the acceptance has been canceled after the month of the receiving.
(11) "Estimated payment": It indicates the completion of estimated payment.
(12) "Settlement payment": It indicates the completion of settlement payment.
(13) "Re-payment": It indicates the completion of re-payment.
(14) "Re-re-payment: It indicates the completion of re-re-payment.
(15) "Contract": It indicates that the receiving has been carried out based on the contract agreement.

### (In regard to update of status)

The update of the status is carried out by updating a flag corresponding to the status. The flag is updated in response to a specified input accepted by the factory terminal device 110 from the work staff. Hereinafter, a specified input in a case where each status is updated will be described.

Setting of (1) "waiting for arrival" described above: Input indicating confirmation of reservation by user.

Update to (2) "already arrived and waiting to be weighed" described above: Input indicating that the recycled raw material has been brought in the receiving location. It is noted that the input may be an input of image data captured at the time of the receiving.

Update to (3) "weighed and under inspection" described above: Input of wet weight.

Update to (4) "sampling" described above: Input indicating start of sampling.

Update to (5) "measuring moisture value" described above: Input indicating end of sampling.

Update to (6) "analysis in progress" described above: Input of moisture value.

Update to (7) "analysis value confirmed" described above: Input of analysis value.

Update to (8) "reanalysis value confirmed" described above: Input of reanalysis value.

Update to (9) "re-reanalysis value confirmed" described above: Input of re-reanalysis value.

Update to (10) "cancel acceptance" described above: Input indicating cancel acceptance.

Update to (11) to (14) described above: Input indicating each payment

Update to (15) described above: Input indicating contract.

### (In regard to example of reservation screen pertaining to transaction of recycled raw material)

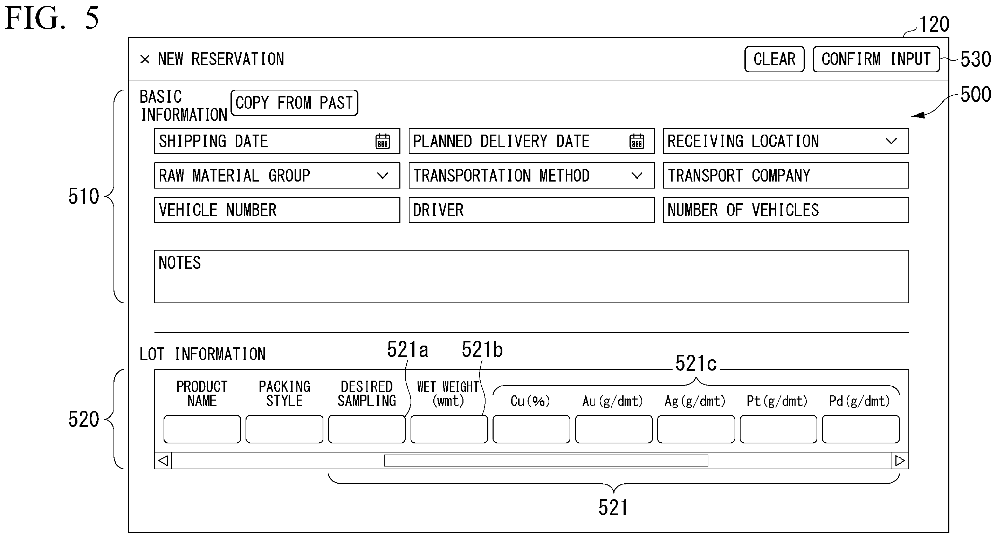

Next, a reservation screen displayed on the user terminal device 120 will be described with reference to FIG. 5.

FIG. 5 is an explanatory view showing an example of a reservation screen displayed on the user terminal device 120. In FIG. 5, a reservation screen 500 is a screen displayed by pressing (selecting) a reservation start button displayed on a home screen not shown in the drawing. The reservation screen 500 accepts various inputs from the user.

Specifically, the reservation screen 500 includes various input fields. More specifically, the reservation screen 500 includes a basic information input field 510 and a lot information input field 520. The basic information input field 510 includes each of the following fields of "shipping date", "planned delivery date", "receiving location", "raw material group", "transportation method", "transport company", "vehicle number", "driver", "number of vehicles", and "notes". For example, characters or numbers may be input into each field from a pull-down menu, or the characters or numbers may be directly input thereinto.

In the field of the "shipping date", the designation of the day on which the user ships the recycled raw material is accepted. In the field of the "planned delivery date", the designation of the planned date on which the user brings in the recycled raw material is accepted. In the field of the "receiving location", the designation of the smelter (factory) where the recycled raw material is received is accepted. In the field of the "raw material group", the designation of the recycled raw material or the noble metal raw material which is a raw material of a noble metal is accepted. In the present embodiment, it is assumed that the user designates the recycled raw material. In the field of the "transportation method", for example, the designation of the business office that handles the transportation of the recycled raw material is accepted. In the field of each of "transport company", "vehicle number", "driver", and "number of vehicles" accepts an input of various information pertaining to the transportation of the recycled raw material.

The lot information input field 520 includes a "product name", a "packing style", and expected information 521. In the field of the "product name", the designation of the product name such as a gold and silver slag, a part, an uncrushed substrate, or sludge is accepted. In the field of the "packing style", the input of the kind of the container in which the recycled raw material is packaged and the number of containers is accepted.

The expected information 521 is information indicating an expectation pertaining to the transaction designated by the user. Specifically, the expected information 521 indicates information that is input into each field of desired sampling 521a, a wet weight 521b, and quality 521c. In the field of the desired sampling 521a, the sampling method desired by the user is accepted. Specifically, in the field of the desired sampling 521a, the input of any of, for example, auto sampling, manual sampling, or no designation is accepted.

In the field of the wet weight 521b, the input of the expected weight for the weight of the recycled raw material including the moisture predicted by the user is accepted.

In the field of the grade 521c, the input of the expected content rate (or content) of each component contained in the recycled raw material is accepted.

In a case where items are input into various input fields on a reservation screen 500, and the confirmation button 530 is pressed, the screen transitions to a confirmation screen not shown in the drawings. In a case where the confirmation of the reservation details is accepted on the confirmation screen, the reservation details are confirmed. In a case where the reservation details are confirmed, the user terminal device 120 transmits the transaction information indicating the confirmed reservation details to the transaction management server 100. Then, the transaction management server 100 registers the transaction information in the transaction management DB 101.

### (Example of functional configuration of transaction management system 1)

Next, a functional configuration of the transaction management system 1 will be described.

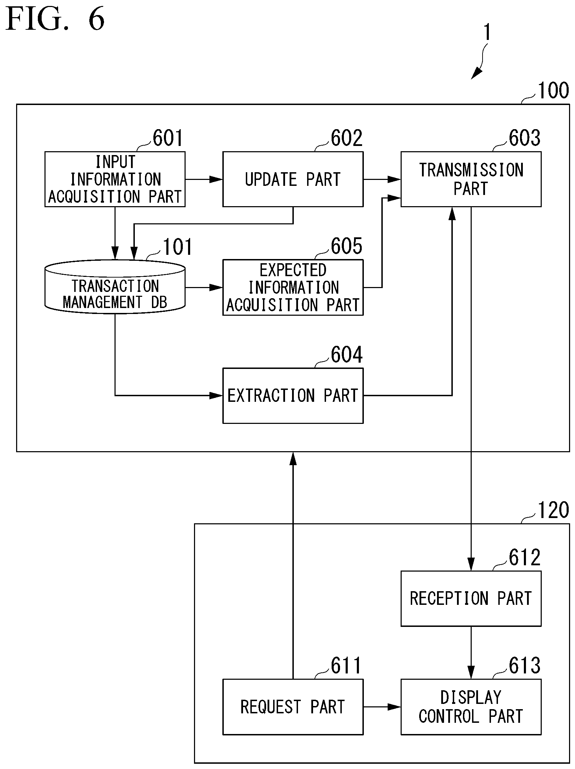

FIG. 6 is a block view showing an example of a functional configuration of the transaction management system 1. In FIG. 6, the transaction management server 100 includes an input information acquisition part 601, an update part 602, a transmission part 603, an extraction part 604, and an expected information acquisition part 605. Each part is realized by the CPU 201 provided in the transaction management server 100. That is, the CPU 201 executes the transaction management program stored in the memory 202, whereby the function of each part is realized.

In addition, the user terminal device 120 includes a request part 611, a reception part 612, and a display control part 613. Each part is realized by the CPU 301 provided in the user terminal device 120. That is, the CPU 301 executes the display control program stored in the memory 302, whereby the function of each part is realized.

The input information acquisition part 601 is an example of the information acquisition means. The input information acquisition part 601 acquires information on the progress status in each step including the content evaluation process of the transaction pertaining to the recycled raw material. Each step is a step corresponding to each status. The information on the progress status includes, for example, input information accepted from the work staff in each step. The input information is information based on a specified input pertaining to the update of the status. The input information includes an evaluation result in the content evaluation process.

The update part 602 updates the status information according to each step based on the input information acquired by the input information acquisition part 601. The status information is information indicating a status among the transaction information registered in the transaction management DB 101. As an example of the update of the status information, as described above, in a case where the current status is "waiting for arrival", the update part 602 updates the status to "already arrived and waiting to be weighed" by acquiring the input information indicating that the recycled raw material has been brought in the receiving location.

### (Display of viewing screen by user terminal device 120)

The user terminal device 120 is capable of displaying the viewing screen based on the screen information including the transaction information. The request part 611 of the user terminal device 120 makes a viewing request of the screen information to the transaction management server 100. The request part 611 accepts a display start of the viewing screen from the user to make a viewing request. The viewing request includes a user ID for identifying the user.

The transmission part 603 of the transaction management server 100 transmits the screen information to the user terminal device 120 in response to the viewing request from the request part 611. The screen information to be transmitted includes the entire transaction information pertaining to the transaction of the user. That is, the screen information to be transmitted does not include transaction information pertaining to a transaction of another user different from the user.

In transmitting the screen information pertaining to the transaction of the user, the corresponding transaction information is extracted. Specifically, the extraction part 604 extracts the transaction information corresponding to the user ID based on the user ID included in the viewing request. The transmission part 603 transmits the screen information including only the transaction information extracted by the extraction part 604 to the user terminal device 120.

It is noted that it is also possible to set the screen information to be transmitted to be specific transaction information designated by the user among the entire transaction information pertaining to the transaction of the user. In this case, the viewing request needs only to include the LOT number in order to specify the transaction information. The extraction part 604 needs only to extract the transaction information including the LOT number based on the LOT number included in the viewing request.

In addition, the transmission part 603 transmits the screen information not only to the user terminal device 120 but also to the factory terminal device 110. Specifically, the transmission part 603 transmits the screen information indicating the transaction information to the factory terminal device 110. The screen information to be transmitted to the factory terminal device 110 includes transaction information pertaining to all transactions, that is, it includes transaction information that is not extracted by the extraction part 604. The timing at which the screen information is transmitted to the factory terminal device 110 may be a timing at which a viewing request has been made from the factory terminal device 110, may be a timing at which a predetermined time has elapsed (sequentially), or may be a timing at which a new reservation has been accepted from the user terminal device 120.

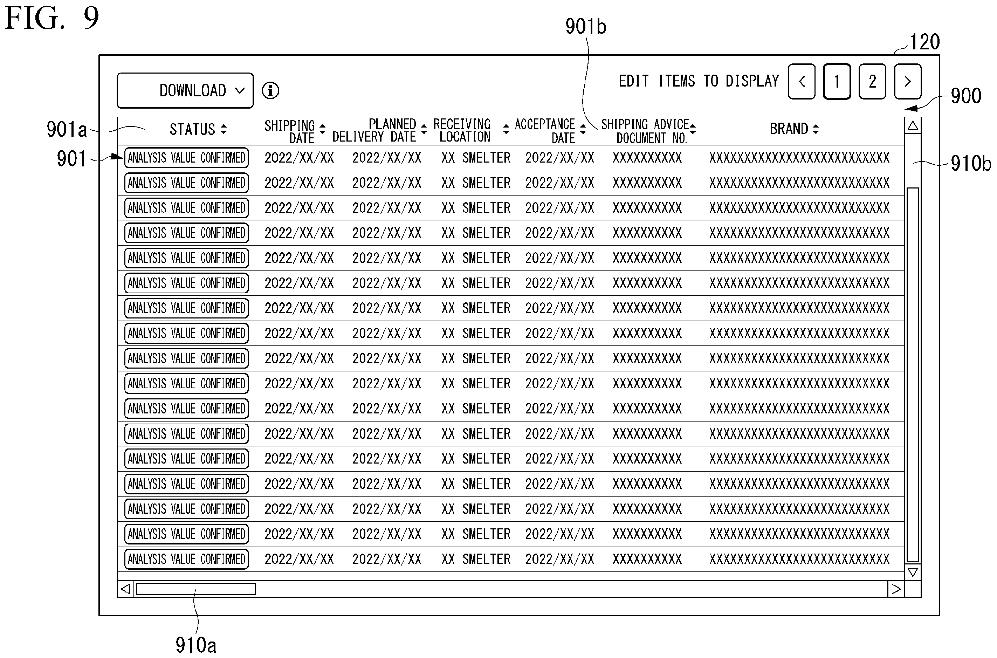

The reception part 612 receives the screen information from the transaction management server 100 in response to the viewing request of the request part 611. The display control part 613 displays the screen information received by the reception part 612 on the display (display unit). As a result, the user terminal device 120 is capable of displaying the status in the content evaluation process. A screen example displayed by the display control part 613 will be described later with reference to FIGS. 9 to 11.

### (In regard to update of status based on input of evaluation result)

The step in the content evaluation process includes an evaluation step pertaining to the evaluation of the recycled raw material. The evaluation step includes, for example, a step of weighing the recycled raw material, a step of measuring the moisture value, and a step of analyzing the component value. The input information acquisition part 601 acquires the evaluation result accepted in the evaluation step as input information. The evaluation result is, for example, a wet weight, a moisture amount, and a component.

The update part 602 updates the status information in response to the acquisition of the evaluation result by the input information acquisition part 601. As described above, for example, in a case where the current status is "measuring moisture value", the update part 602 updates the status to "analysis in progress" by inputting the moisture value as the input information.

### (In regard to transmission of evaluation result)

The screen information to be transmitted by the transmission part 603 includes the evaluation result. That is, the transmission part 603 transmits the screen information including the evaluation result to the user terminal device 120 in response to the viewing request from the user terminal device 120. The user terminal device 120 displays the screen information including the evaluation result. As a result, the user can check the evaluation result.

### (In regard to notification in case where deviation is present between expected information and input information)

The expected information acquisition part 605 acquires the expected information 521 (see FIG. 5). The transmission part 603 transmits a confirmation notification based on the deviation between the expected information 521 and the input information to the user terminal device 120. Specifically, as described above, the expected information 521 includes a sampling method desired by the user, an expected weight (wet weight) of the recycled raw material designated by the user, and a component. In addition, it includes a weighing result in the step of weighing the recycled raw material.

The transmission part 603 transmits the confirmation notification based on the deviation between the expected weight and the weighing result to the user terminal device 120. For example, in a case where a deviation equal to or larger than a predetermined deviation ratio (for example, 5%) is present between the expected weight and the weighing result, the transmission part 603 transmits a confirmation notification to the user terminal device 120. On the other hand, in a case where a deviation equal to or larger than a predetermined deviation ratio (5%) is not present between the expected weight and the weighing result, the transmission part 603 does not transmit a confirmation notification to the user terminal device 120. The transmission of the confirmation notification is carried out based on an operation pertaining to the transmission by the work staff; however, it may be carried out automatically.

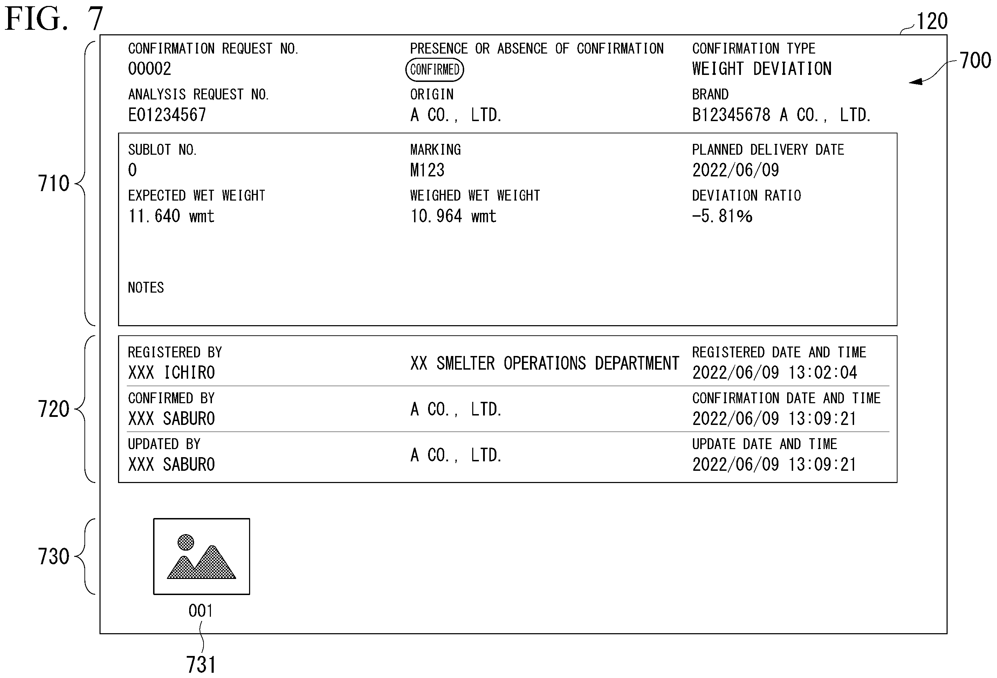

Here, a viewing screen indicating that the confirmation notification pertaining to the weight has been carried out will be described with reference to FIG. 7.

FIG. 7 is an explanatory view showing an example of a viewing screen indicating that a confirmation notification pertaining to the weight has been carried out. In FIG. 7, the viewing screen 700 includes a weight information field 710, a person in charge field 720, and an imaging data region 730. The weight information field 710 includes the expected wet weight input by the user, the weighed wet weight measured by the work staff, and the deviation ratio.

In a case where the deviation ratio is 5% or more, the factory terminal device 110 accepts, from the work staff, a predetermined operation pertaining to a confirmation notification (for example, transmission of an e-mail) to the user. In a case where the factory terminal device 110 accepts the predetermined operation from the work staff, the factory terminal device 110 transmits the confirmation notification to the user terminal device 120. On the viewing screen 700, the name of the work staff (XXX Ichiro, business department, XX smelter) who has transmitted the confirmation notification is displayed as the registrant.

In a case where the user terminal device 120 receives the confirmation notification, the user terminal device 120 accepts the consent or rejection from the user regarding the deviation. The screen for accepting the consent or the rejection may be the viewing screen 700 or may be another screen (for example, a mail screen). The viewing screen 700 shows a screen on which the consent of the user has been accepted regarding the deviation. Specifically, in the person in charge field 720, the user name (XXX Saburo: A Corporation) who has consented to the change is displayed in the fields of "confirmed by" and "updated by". It is noted that in a case where the user terminal device 120 has accepted the rejection from the user regarding the deviation, the user terminal device 120 needs only to be configured to further accept the cancellation of the transaction. In addition, an ask for reanalysis may be accepted from the user, and an ask for re-reanalysis may be further accepted in a case where there is a deviation even in the reanalysis.

### (In regard to imaging data region 730)

In the imaging data region 730, raw material image data 731 is displayed. The raw material image data 731 is an image of the recycled raw material received by the recycling factory, and it indicates an image in a case where the weighing of the recycled raw material is started. The image is captured by the work staff, for example, in a step of waiting for weighing. The device to be used for imaging is, for example, a smartphone as the factory terminal device 110. A predetermined application (application software) pertaining to the transaction management system 1 is installed in advance in the smartphone. The work staff activates the application to capture an image of the recycled raw material. The factory terminal device 110 uploads the raw material image data 731 obtained by imaging to the transaction management server 100. The recycled raw material received by the recycling factory can be visualized by the raw material image data 731. Therefore, the user can easily check, by using the raw material image data 731, whether or not the recycled raw material shipped to the recycling factory and the recycled raw material that has been actually brought in are matched with each other.

### (In regard to another example of confirmation notification)

In the present embodiment, the confirmation notification is issued not only in a case where the deviation ratio is 5% or more but also in a case where the sampling method is changed. This will be described. As described above, the expected information 521 includes information that indicates one sampling method designated by the user among a plurality of sampling methods to be used in the sampling step. In addition, the input information includes information indicating a sampling method designated by the work staff. There is a case where a sampling method designated by the work staff and a sampling method designated by the user are different from each other. That is, the input information may include information indicating another sampling method different from the one sampling method designated by the user.

The transmission part 603 transmits the confirmation notification based on the one sampling method and another sampling method to the user terminal. Specifically, in a case where there is a deviation between the two sampling methods, the transmission part 603 transmits a confirmation notification to the user terminal device 120. On the other hand, in a case where there is no deviation between the two sampling methods, the transmission part 603 does not transmit a confirmation notification to the user terminal device 120. The transmission of the confirmation notification is carried out based on an operation pertaining to the transmission by the work staff; however, it may be carried out automatically.

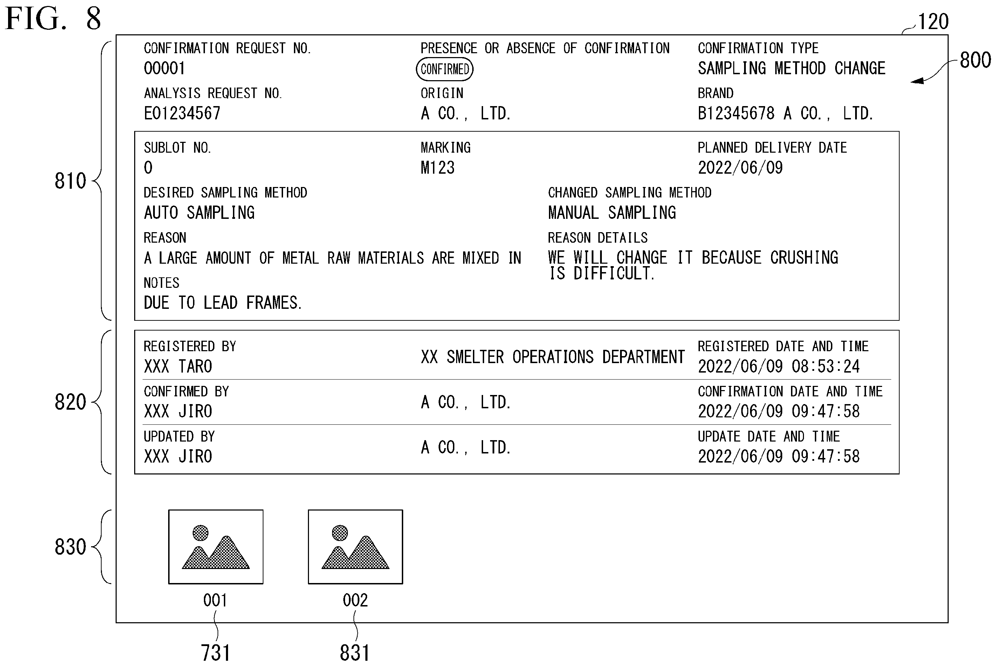

Here, a viewing screen indicating that the confirmation notification pertaining to the change of the sampling method has been carried out will be described with reference to FIG. 8.

FIG. 8 is an explanatory view showing an example of a viewing screen indicating that a confirmation notification pertaining to a change in a sampling method has been carried out. In FIG. 8, the viewing screen 800 includes a sampling information field 810, a person in charge field 820, and an imaging data region 830. The sampling information field 810 includes a desired sampling method designated by the user, a sampling method pertaining to a change designated by the work staff, a reason for the change, and the like.

In a case where the sampling method is changed, the factory terminal device 110 accepts, from the work staff, a predetermined operation pertaining to a confirmation notification (for example, transmission of an e-mail) to the user. In a case where the factory terminal device 110 accepts the predetermined operation from the work staff, the factory terminal device 110 transmits the confirmation notification to the user terminal device 120. On the viewing screen 800, the name of the work staff (XXX Taro, business department, XX smelter) who has transmitted the confirmation notification is displayed as the registrant.

In a case where the user terminal device 120 receives the confirmation notification, the user terminal device 120 accepts the consent or rejection from the user regarding the change in the sampling method. The screen for accepting the consent or the rejection may be the viewing screen 800 or may be another screen (for example, a mail screen). The viewing screen 800 shows a screen on which the consent of the user has been accepted regarding the change of the sampling method. Specifically, in the person in charge field 820, the user name (XXX Jiro: A Corporation) who has consented to the change is displayed in the fields of "confirmed by" and "updated by". It is noted that in a case where the user terminal device 120 has accepted the rejection from the user regarding the change of the sampling method, the user terminal device 120 needs only to be configured to further accept the cancellation of the transaction.

### (In regard to sampling video 831)

In the present embodiment, the step (evaluation step) of the content evaluation process includes a step of capturing an image of the recycled raw material by the work staff. The step in which the imaging is carried out is, for example, a sampling step. The imaging data is, for example, a video (sampling video). It is noted that the step in which the imaging is carried out is not limited to the sampling step, and another step can be also used.

The transmission part 603 transmits the screen information including the imaging data to the user terminal device 120 in response to the viewing request from the user terminal device 120. The user terminal device 120 displays the viewing screen 800 including the imaging data. Specifically, the raw material image data 731 and a sampling video 831 are attached to the imaging data region 830. The sampling video 831 is captured by a work staff in charge in the sampling step.

The device to be used for imaging is, for example, a smartphone as the factory terminal device 110. A predetermined application (application software) pertaining to the transaction management system 1 is installed in advance in the smartphone. The work staff activates the application and captures a video in the sampling step. The factory terminal device 110 uploads the sampling video 831 obtained by imaging to the transaction management server 100. The sampling step (sampling method, the fact that sampling has been carried out) can be visualized by such a sampling video 831. Therefore, the user can easily check the sampling step pertaining to the transaction.

### (Transaction list viewing screen displayed on user terminal device 120)

FIG. 9 is an explanatory view showing an example of a transaction list viewing screen displayed on the user terminal device 120. In FIG. 9, a list 900 pertaining to a transaction of the user is displayed on the display of the user terminal device 120. The list 900 includes detailed information such as a status 901a and a shipping advice document number 901b for each transaction 901. In addition, the list 900 includes a left-right scroll bar 910a and an up-down scroll bar 910b.

The user is capable of viewing items other than the items displayed on the screen by moving the left-right scroll bar 910a in the right direction. In addition, the user is capable of viewing the transaction 901 of another status that is not displayed on the screen by moving the up-down scroll bar 910b downward.

It is noted that the factory terminal device 110 is also capable of displaying the list 900. The factory terminal device 110 is capable of displaying the same screen as the list 900 in a case where the user carries out narrowing down. It is noted that in a case where narrowing down is not carried out, the factory terminal device 110 is capable of displaying a list of the transactions 901 of all users.

### (Another screen example of transaction list viewing screen)

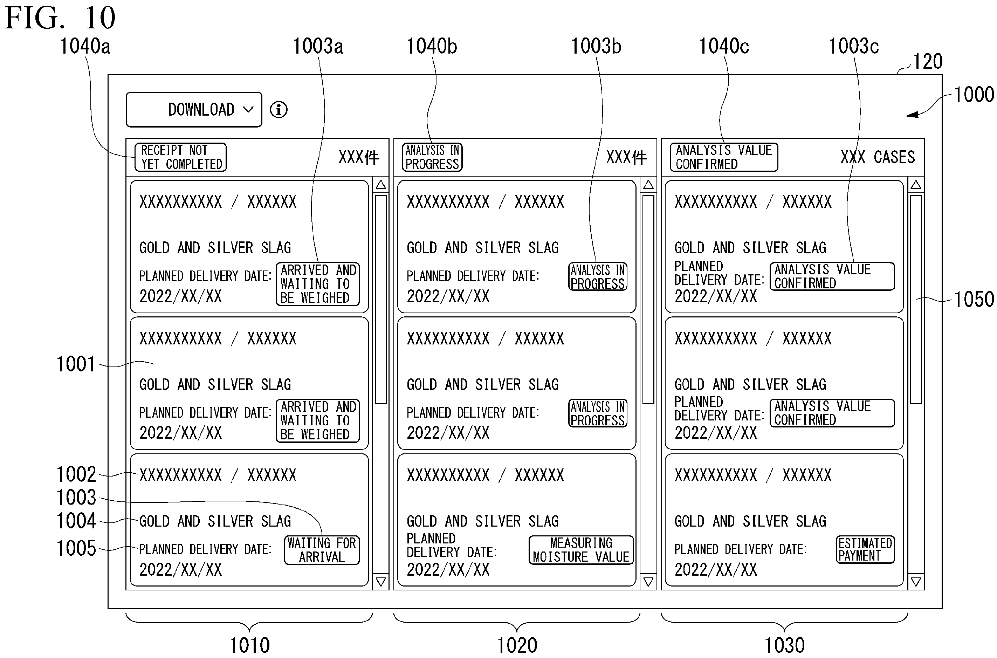

Next, another screen example of the transaction list viewing screen will be described. In the list 900 shown in FIG. 9, the display format of the list 900 is capable of being changed by operating a predetermined button for accepting the switching of the screen. A screen example in which the display format is changed will be described with reference to FIG. 10.

FIG. 10 is an explanatory view showing another screen example of the transaction list viewing screen. In FIG. 10, a group list 1000 of each transaction is displayed on the display of the user terminal device 120. The group list 1000 is a screen in which each status is classified into three groups and displayed. The groups are displayed by being divided into, for example, three groups of a group 1010 denoted as "receipt not yet completed", a group 1020 denoted as "analysis in progress", and a group 1030 denoted as "analysis value confirmed".

The group 1010 denoted as "receipt not yet completed" indicates the transaction information of the status of each of "waiting for arrival", "already arrived and waiting to be weighed", and "weighed and under inspection".

The group 1020 denoted as "analysis in progress" indicates the transaction information of the status of each of "sampling", "measuring moisture value", and "analysis in progress".

The group 1030 denoted as "analysis confirmed" indicates the transaction information of the status of each of "analysis value confirmed", "reanalysis value confirmed", "re-reanalysis value confirmed", "estimated payment", "settlement payment", "re-payment", "re-re-payment", and "contract".

In addition, the group list 1000 includes a scroll bar 1050. The user is capable of viewing another transaction 1001, which is not displayed on the screen, for each of groups 1010, 1020, and 1030 by moving the scroll bar 1050 downward.

In the group list 1000, each transaction 1001 includes items of a shipping advice document number 1002, a status 1003, a product name 1004, and a planned delivery date 1005. Therefore, the transaction 1001 displayed in the group list 1000 has fewer displayed items than the transaction 901 shown in the list 900.

In addition, the group list 1000 includes group displays 1040a, 1040b, and 1040c. The group displays 1040a, 1040b, and 1040c indicate the statuses and are displayed in display aspects different from each other (for example, colors different from each other) for each group. In addition, the status displays 1003a, 1003b, and 1003c are displayed in the same display aspect (for example, the same color) such that they correspond to the group displays 1040a, 1040b, and 1040c. Specifically, the group display 1040a and the status display 1003a are displayed in the same color. The group display 1040b and the status display 1003b are displayed in the same color. The group display 1040c and the status display 1003c are displayed in the same color.

As described above, since the status is displayed in the group list 1000 by being divided for each group, it is possible to easily grasp the approximate status. In addition, since the user can recognize each of the groups 1010, 1020, and 1030 by color, it is possible to more easily grasp the approximate status. It is noted that the user terminal device 120 is capable of carrying out switching from the group list 1000 to the list 900 by accepting a predetermined operation in the group list 1000.

In addition, the factory terminal device 110 is also capable of displaying a list and a group list, as in the case of the user terminal device 120. In addition, the factory terminal device 110 is also capable of carrying out switching from the list to the group list or switching from the group list to the list by operating a predetermined button for accepting the switching of the screen.

### (Detailed viewing screen displayed on user terminal device 120)

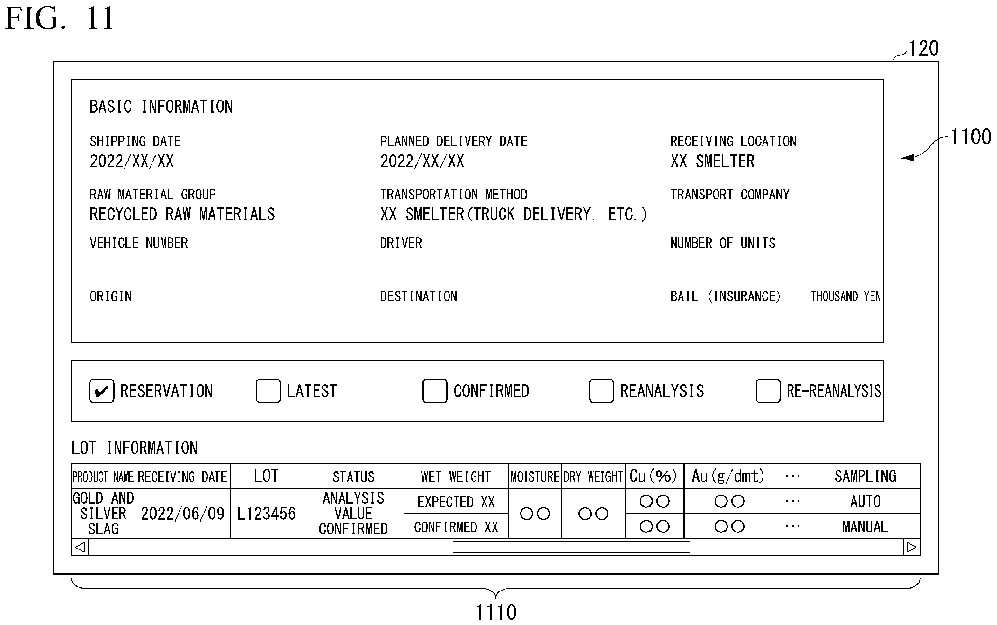

Next, a detailed viewing screen displayed on the user terminal device 120 will be described. In the list 900 shown in FIG. 9 or the group list 1000 shown in FIG. 10, in a case where a predetermined button (for example, the shipping advice document numbers 901b and 1002 corresponding to the transaction) is pressed, the screen transitions to a detailed viewing screen of the acceptance status. The detailed viewing screen will be described with reference to FIG. 11. It is noted that in FIG. 11, a detailed viewing screen for a transaction having a status of "analysis value confirmed" is described.

FIG. 11 is an explanatory view showing an example of a detailed viewing screen displayed on the user terminal device 120. In FIG. 11, the detailed viewing screen 1100 includes lot information 1110. The lot information 1110 includes items of "product name", "receiving date", "LOT", "status", "wet weight", "moisture", "dry weight", "component", and "sampling". The "wet weight", the "component", and the "sampling" include the expected information 521 that has been input on the reservation screen 500 (see FIG. 5) and the evaluation result that has been input in the recycling factory.

Such a detailed viewing screen 1100 makes it possible for the user to grasp the evaluation result and the like in detail for each transaction with a simple operation.

### (In regard to flow of processing in transaction management system 1)

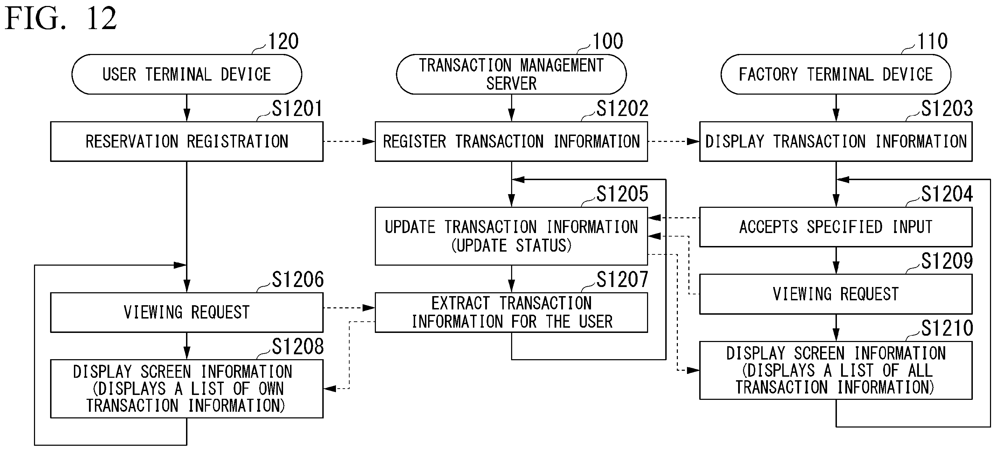

Next, a flow of processing in the transaction management system 1 will be described with reference to FIG. 12.

FIG. 12 is a sequence view showing a flow of processing in the transaction management system 1. In FIG. 12, the user terminal device 120 accepts the reservation registration of the transaction from the user (step S1201). In a case where the user terminal device 120 accepts the reservation registration, the user terminal device 120 transmits the accepted reservation details to the transaction management server 100.

In a case where the transaction management server 100 receives the reservation details from the user terminal device 120, the transaction management server 100 registers the received reservation details in the transaction management DB 101 as the transaction information (step S1202). Then, the transaction management server 100 transmits the transaction information to the factory terminal device 110.

In a case where the factory terminal device 110 receives the transaction information from the transaction management server 100, the factory terminal device 110 displays the received transaction information on the display (step S1203). Then, the factory terminal device 110 accepts a specified input pertaining to the update of the status, such as the evaluation result, in response to the operation of the work staff (step S1204). In a case where the factory terminal device 110 accepts the specified input, the factory terminal device 110 transmits input information corresponding to the accepted input to the transaction management server 100.

In a case where the transaction management server 100 receives the input information from the factory terminal device 110, the transaction management server 100 updates the transaction information based on the input information (step S1205). The update of the transaction information includes the update of the status. It is noted that the processing of the step S1204 and the step S1205 is repeatedly carried out each time at which there is a specified input from the work staff.

In a case where the user terminal device 120 accepts an operation of starting the viewing of the viewing screen from the user, the user terminal device 120 makes a viewing request to the transaction management server 100 (step S1206). In a case where the user terminal device 120 receives the viewing request from the user terminal device 120, the transaction management server 100 extracts the transaction information of the user based on the user ID included in the viewing request (step S1207). Then, the transaction management server 100 transmits the screen information including only the extracted transaction information to the user terminal device 120. The user terminal device 120 displays, on the display, the viewing screen as a list including own (one's own company's) transaction information received from the transaction management server 100 (step S1208).

In addition, in a case where the factory terminal device 110 accepts an operation of starting the viewing of the viewing screen from the work staff, the factory terminal device 110 makes a viewing request to the transaction management server 100 (step S1209). It is noted that the request for starting the viewing may be automatically made at a regular timing in a case where the factory terminal device 110 is activated. In a case where the transaction management server 100 receives the viewing request from the factory terminal device 110, the transaction management server 100 transmits the entire screen information to the user terminal device 120. The user terminal device 120 displays, as a list, a viewing screen including the entire transaction information received from the transaction management server 100 on the display (step S1210). It is noted that the factory terminal device 110 is capable of displaying a viewing screen including only the transaction information of the specific user from the display of the entire transaction information as a list, by the narrowing-down function.

Next, the processing to be carried out by the user terminal device 120 and the processing to be carried out by the transaction management server 100 will be described. First, the processing to be carried out by the user terminal device 120 will be described.

### (Example of processing to be carried out by user terminal device 120)

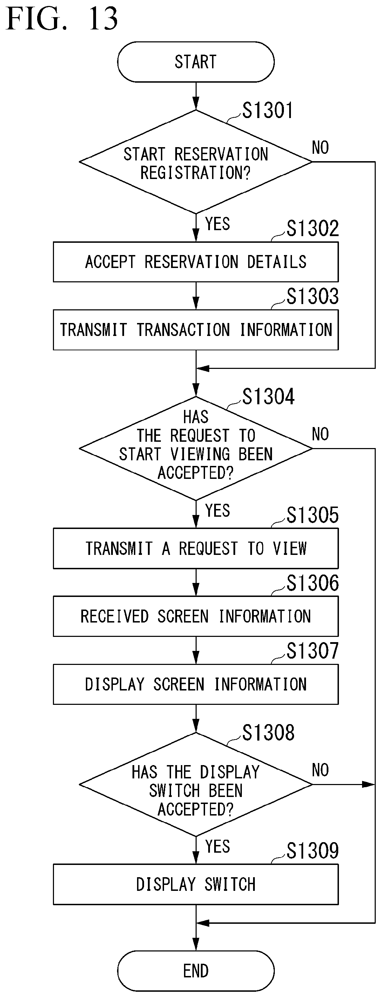

FIG. 13 is a flowchart showing an example of processing to be carried out by the user terminal device 120. It is noted that the processing shown in FIG. 13 is processing that is started at all times (periodically at a very short time interval) in the user terminal device 120. In FIG. 13, the user terminal device 120 determines whether or not a start operation of new reservation registration pertaining to the transaction has been accepted (step S1301). In a case where the start operation of the new reservation registration is not accepted (NO in the step S1301), the user terminal device 120 proceeds to the processing of the step S1304.

In a case where the start operation of the new reservation registration has been accepted (YES in the step S1301), the user terminal device 120 accepts the input of various reservation details (step S1302). Then, in a case where the reservation details are confirmed, the user terminal device 120 transmits the transaction information indicating the reservation details to the transaction management server 100 (step S1303).

Next, the user terminal device 120 determines whether or not the operation of starting the viewing has been accepted (step S1304). In a case where the operation of starting the viewing is not accepted (NO in the step S1304), the user terminal device 120 ends the series of processing. In a case where the operation of starting the viewing has been accepted (YES in step S1304), the user terminal device 120 transmits a viewing request to the transaction management server 100 (step S1305).

The user terminal device 120 receives the screen information including only the own transaction information from the transaction management server 100 in response to the viewing request (step S1306). Then, the user terminal device 120 displays, on the display, the screen information including only the own transaction information received from the transaction management server 100 (step S1307). Next, the user terminal device 120 determines whether or not the display switch has been accepted (step S1308). The display switch is, for example, switch to any one of a plurality of screens including the list 900, the group list 1000, and the detailed viewing screen 1100.

In a case where the display switch is not accepted (NO in the step S1308), the user terminal device 120 ends the series of processing. On the other hand, in a case where the display switch has been accepted (YES in step S1308), the user terminal device 120 carries out display switch to the viewing screen according to the accepted operation (step S1309) and then ends the series of processing.

### (Example of processing pertaining to an update of status performed by transaction management server 100)

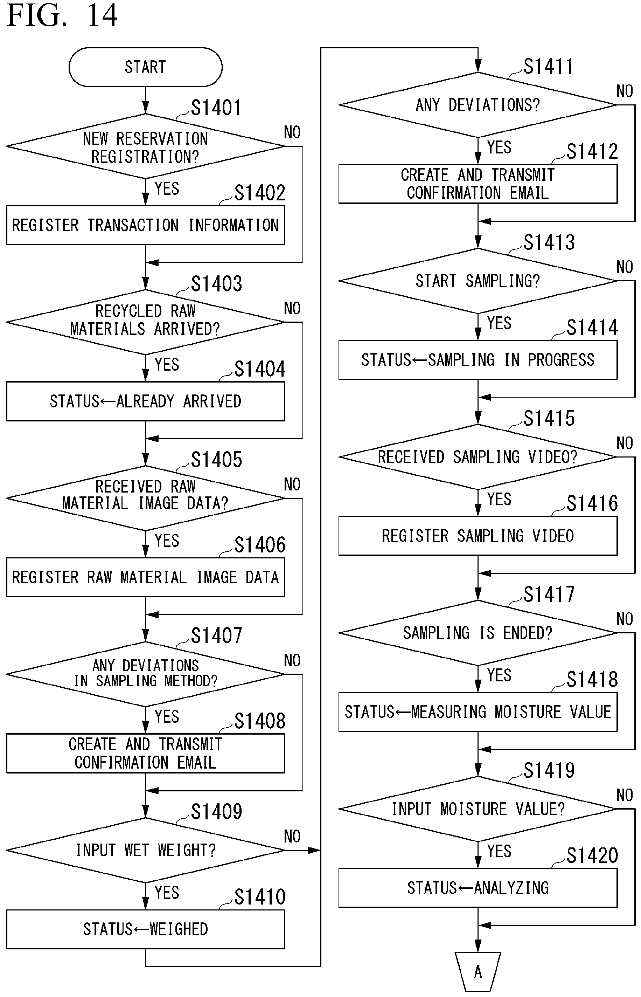

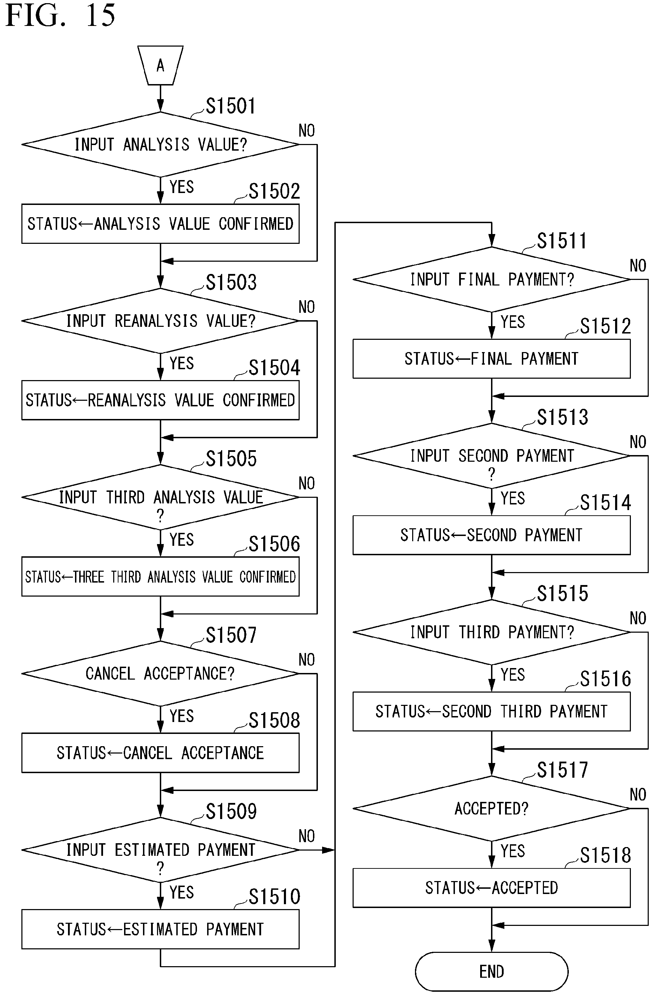

FIG. 14 and FIG. 15 are flowcharts showing an example of processing pertaining to an update of a status, which is carried out by the transaction management server 100. It is noted that the processing shown in FIG. 14 and FIG 15 is processing that is started at all times (periodically at a very short time interval) in the transaction management server 100. In FIG. 14, the transaction management server 100 determines whether or not the reservation details indicating the new reservation registration have been received from the user terminal device 120 (step S1401). In a case where the reservation details indicating the new reservation registration are not received (NO in the step S1401), the transaction management server 100 proceeds to the processing of the step S1403.

On the other hand, in a case where the reservation details indicating the new reservation registration has been received (YES in step S1401), the transaction management server 100 registers the reservation details received from the user terminal device 120 in the transaction management DB 101 as the transaction information (step S1402). Then, the transaction management server 100 determines whether or not the recycled raw material has arrived (step S1403). Specifically, the determination in the step S1403 the factory terminal device 110 is a determination as to whether or not has received, from the factory terminal device 110, the input information indicating the input by accepting, from the work staff, the input indicating that the recycled raw material has been brought in the receiving location.

In a case where the recycled raw material does not arrive (NO in the step S1403), the transaction management server 100 proceeds to the processing of the step S1405. On the other hand, in a case where the recycled raw material has arrived (YES in step S1403), the transaction management server 100 updates the status from "waiting for arrival" to "already arrived and waiting to be weighed" (step S1404).

Next, the transaction management server 100 determines whether or not the raw material image data has been received from the factory terminal device 110 (step S1405). In a case where the raw material image data is not received (NO in the step S1405), the transaction management server 100 proceeds to the processing of the step S1407. On the other hand, in a case where the raw material image data has been received (YES in step S1405), the transaction management server 100 registers the raw material image data in the transaction management DB 101 (step S1406). It is noted that the raw material image data is associated with a LOT number and is registered in the transaction information indicated by the LOT number.

Next, the transaction management server 100 determines whether or not there is a deviation between the sampling method designated by the user and the sampling method designated by the work staff (step S1407). It is noted that the determination in the step S1407 is not limited to being carried out by the transaction management server 100, and the determination may be carried out by the work staff. In a case where there is no deviation in the sampling method (NO in the step S1407), the transaction management server 100 proceeds to the processing of the step S1409.

On the other hand, in a case where there is a deviation in the sampling method (YES in step S1407), the transaction management server 100 transmits a confirmation notification (for example, an e-mail) to the user terminal device 120 in response to an instruction from the factory terminal device 110 (step S1408). In response to the reception of the information indicating that the user has consented, from the user terminal device 120 by this confirmation notification, the transaction management server 100 changes the sampling method. It is noted that the change of the sampling method may be carried out by the factory terminal device 110 accepting a confirmation operation from the work staff instead of or in addition to receiving information indicating that the user has consented the change from the user terminal device 120.

Next, the transaction management server 100 determines whether or not there has been an input of the wet weight (step S1409). Specifically, the determination in the step S1409 is a determination as to whether or not the factory terminal device 110 has received, from the factory terminal device 110, the input information pertaining to the input by accepting the input of the wet weight from the work staff. In a case where there is no input of the wet weight (NO in the step S1409), the transaction management server 100 proceeds to the processing of the step S1411. On the other hand, in a case where there has been the input of the wet weight (YES in step S1409), the status is updated from "already arrived and waiting to be weighed" to "weighed and under inspection" (step S1410).

Next, the transaction management server 100 determines whether or not there is a deviation of 5% or more between the wet weight that has been input and the expected weight (step S1411). In a case where there is no deviation of 5% or more between the wet weight that has been input and the expected weight (NO in the step S1411), the transaction management server 100 proceeds to the processing of the step S1413. On the other hand, in a case where there is a deviation of 5% or more between the wet weight that has been input and the expected weight (YES in the step S1411), the transaction management server 100 transmits a confirmation notification (for example, an e-mail) to the user terminal device 120 in response to an instruction from the factory terminal device 110 (step S1412). In a case where the information indicating that the user has consented the transaction is received from the user terminal device 120 by this confirmation notification, the transaction is continued.

Next, the transaction management server 100 determines whether or not the sampling is started (step S1413). Specifically, the determination in the step S1413 is a determination as to whether or not the factory terminal device 110 has received, from the factory terminal device 110, the input information indicating the input by accepting, from the work staff, the input indicating the start of the sampling.

In a case where the sampling is not started (NO in the step S1413), the transaction management server 100 proceeds to the processing of the step S1415. On the other hand, in a case where the sampling is started (YES in step S1413), the transaction management server 100 updates the status from "weighed and under inspection" to "sampling" (step S1414).

Next, the transaction management server 100 determines whether or not the sampling video has been received from the factory terminal device 110 (step S1415). In a case where the sampling video is not received (NO in the step S1415), the transaction management server 100 proceeds to the processing of the step S1417. On the other hand, in a case where the sampling video has been received (YES in step S1415), the transaction management server 100 registers the sampling video in the transaction management DB 101 (step S1416). It is noted that the sampling video is associated with a LOT number and is registered in the transaction information indicated by the LOT number.

Next, the transaction management server 100 determines whether or not the sampling is ended (step S1417). Specifically, the determination in the step S1417 is a determination as to whether or not the factory terminal device 110 has received, from the factory terminal device 110, the input information indicating the input by accepting, from the work staff, the input indicating the end of the sampling.

In a case where the sampling is not ended (NO in the step S1417), the transaction management server 100 proceeds to the processing of the step S1419. On the other hand, in a case where the sampling is ended (YES in the step S1417), the transaction management server 100 updates the status from "sampling" to "measuring moisture value" (step S1418).

Next, the transaction management server 100 determines whether or not there has been an input of the moisture value (step S1419). Specifically, the determination in the step S1419 is a determination as to whether or not the factory terminal device 110 has received, from the factory terminal device 110, the input information pertaining to the input by accepting the input of the moisture value from the work staff. In a case where there is no input of the moisture value (NO in the step S1419), the transaction management server 100 proceeds to the processing of the step S1501 in FIG. 15. On the other hand, in a case where there is an input of the moisture value (YES in step S1419), the status is updated from "measuring moisture value" to "analysis in progress" (step S1420).

Next, the transaction management server 100 determines whether or not there has been an input of the analysis value (step S1501). Specifically, the determination in the step S1501 is a determination as to whether or not the factory terminal device 110 has received, from the factory terminal device 110, the input information pertaining to the input by accepting the input of the analysis value from the work staff. In a case where there is no input of the analysis value (NO in the step S1501), the transaction management server 100 proceeds to the processing of the step S1503. On the other hand, in a case where there has been the input of the analysis value (YES in the step S1501), the status is updated from "analysis in progress" to "analysis value confirmed" (step S1502).

Next, the transaction management server 100 determines whether or not there has been an input of the reanalysis value (step S1503). Specifically, the determination in the step S1503 is a determination as to whether or not the factory terminal device 110 has received, from the factory terminal device 110, the input information pertaining to the input by accepting the input of the reanalysis value from the work staff. In a case where there is no input of the reanalysis value (NO in the step S1503), the transaction management server 100 proceeds to the processing of the step S1505. On the other hand, in a case where there has been the input of the reanalysis value (YES in step S1503), the status is updated from "analysis value confirmed" to "reanalysis value confirmed" (step S1504).

Next, the transaction management server 100 determines whether or not there has been an input of the re-reanalysis value (step S1505). Specifically, the determination in the step S1505 is a determination as to whether or not the factory terminal device 110 has received, from the factory terminal device 110, the input information pertaining to the input by accepting the input of the re-reanalysis value from the work staff. In a case where there is no input of the re-reanalysis value (NO in the step S1505), the transaction management server 100 proceeds to the processing of the step S1507. On the other hand, in a case where there has been the input of the re-reanalysis value (YES in step S1505), the status is updated from "reanalysis value confirmed" to "re-reanalysis value confirmed" (step S1506).

Next, the transaction management server 100 determines whether or not there has been an input of the cancel acceptance (step S1507). Specifically, the determination in the step S1507 is a determination as to whether or not the factory terminal device 110 has received, from the factory terminal device 110, the input information pertaining to the input by accepting the input of the cancel acceptance from the work staff based on the answer to the confirmation notification from the user. In a case where there is no input of the cancel acceptance (NO in the step S1507), the transaction management server 100 proceeds to the processing of the step S1509. On the other hand, in a case where there has been the input of the cancel acceptance is made (YES in step S1507), the status is updated from the current status to the status of "cancel acceptance" (step S1508).

Next, the transaction management server 100 determines whether or not there has been an input of the estimated payment (step S1509). Specifically, the determination in the step S1509 is a determination as to whether or not the factory terminal device 110 has received, from the factory terminal device 110, the input information pertaining to the input by accepting the input of the estimated payment from the work staff.

The estimated payment is a payment of an estimate of the price based on the expected information from the user, before the completion of the evaluation step.

In a case where there is no input of the estimated payment (NO in the step S1509), the transaction management server 100 proceeds to the processing of the step S1511. On the other hand, in a case where there has been the input of the estimated payment (YES in the step S1509), the status is updated from the current status to the status of "estimated payment" (step S1510).

Next, the transaction management server 100 determines whether or not there has been an input of the settlement payment (step S1511). Specifically, the determination in the step S1511 is a determination as to whether or not the factory terminal device 110 has received, from the factory terminal device **110,** the input information pertaining to the input by accepting the input of the settlement payment from the work staff.

In a case where the estimated payment is carried out, the settlement payment is a difference between the price calculated from the evaluation result and the estimated payment.

In a case where there is no input of the settlement payment (NO in the step S1511), the transaction management server 100 proceeds to the processing of the step S1513. On the other hand, in a case where there has been the input of the settlement payment (YES in the step S1511), the status is updated from the current status to the status of "settlement payment" (step S1512).

Next, the transaction management server 100 determines whether or not there has been an input of the re-payment (step S1513). Specifically, the determination in the step S1513 is a determination as to whether or not the factory terminal device 110 has received, from the factory terminal device 110, the input information pertaining to the input by accepting the input of the re-payment from the work staff.

The re-payment is a payment that occurs for re-adjustment in a case where a discrepancy occurs between the analysis value expected by the user and the actual analysis value in the recycling factory.

In a case where there is no input of the re-payment (NO in the step S1513), the transaction management server 100 proceeds to the processing of the step S1515. On the other hand, in a case where there has been the input of the re-payment (YES in the step S1513), the status is updated from the current status to the status of "re-payment" (step S1514).

Next, the transaction management server 100 determines whether or not there has been an input of the re-re-payment (step S1515). Specifically, the determination in the step S1515 is a determination as to whether or not the factory terminal device 110 has received, from the factory terminal device 110, the input information pertaining to the input by accepting the input of the re-re-payment from the work staff.

The re-re-payment is a payment that occurs for re-re-adjustment in a case where a discrepancy occurs between the analysis value expected by the user and the actual analysis value in the recycling factory.

In a case where there is no input of the re-re-payment (NO in the step S1515), the transaction management server 100 proceeds to the processing of the step S1517. On the other hand, in a case where there has been the input of the re-re-payment (YES in the step S1515), the status is updated from the current status to the status of "re-re-payment" (step S1516).

Next, the transaction management server 100 determines whether or not there has been an input of the contract (step S1517). Specifically, the determination in the step S1515 is a determination as to whether or not the factory terminal device 110 has received, from the factory terminal device 110, the input information pertaining to the input by accepting the input of the contract from the work staff. In a case where there is no input of the contract (NO in the step S1517), the transaction management server 100 ends the series of processing. On the other hand, in a case where there has been the input of the contract (YES in the step S1517), the status is updated from the current status to the status of "acceptance" (step S1518), and the series of processing is ended.

### (Example of processing pertaining to the transmission of screen information carried out by transaction management server 100)

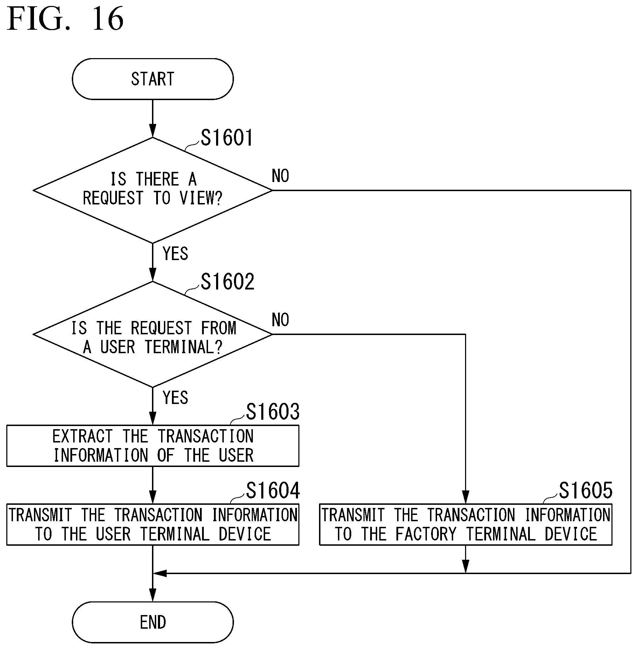

FIG. 16 is a flowchart showing an example of processing pertaining to the transmission of screen information, which is carried out by the transaction management server 100. It is noted that the processing shown in FIG. 16 is processing that is started at all times (periodically at a very short time interval) in the transaction management server 100. In FIG. 16, the transaction management server 100 determines whether or not the viewing request has been received (step S1601). In a case where the viewing request is not received (NO in the step S1601), the transaction management server 100 ends the series of processing.

On the other hand, in a case where the viewing request has been received (YES in step S1601), the transaction management server 100 determines whether or not the request source of the viewing request is the user terminal device 120 (step S1602). In a case where the request source of the viewing request is the user terminal device 120 (YES in the step S1602), the transaction management server 100 extracts the transaction information of the user based on the user ID included in the viewing request (step S1603). Then, the transaction management server 100 transmits the screen information including only the extracted transaction information to the user terminal device 120 (step S1604) and ends the series of processing.

On the other hand, in the step S1602, in a case where the request source of the viewing request is not the user terminal device 120 (NO in the step S1602), that is, that is, in a case where the request source of the viewing request is the factory terminal device 110, the transaction management server 100 transmits the screen information including the entire transaction information to the factory terminal device 110 (step S1605) and ends the series of processing.

As described above, the transaction management server 100 according to the present embodiment updates the status information according to each step based on the information (input information) on the progress status accepted from the work staff in each step including the content evaluation process, and then transmits the screen information including the status information to the user terminal device in response to the viewing request from the user terminal device. As a result, it is possible to notify the user of the status in the transaction pertaining to the recycled raw material. Therefore, the user can grasp the current status. As a result, it is possible to allow the user to clarify the step of the content evaluation process. Therefore, according to the present embodiment, it is possible to clarify a transaction pertaining to a recycled raw material.

In addition, the transaction management server 100 according to the present embodiment updates the status information in response to the acquisition of the evaluation result accepted in each evaluation step, such as the wet weight, the moisture value, and the component value. As a result, the status information can be updated in response to the input of the evaluation result from the work staff. As a result, the status information can be easily and accurately updated.

In addition, the transaction management server 100 according to the present embodiment transmits the screen information including the evaluation result in the evaluation step to the user terminal device 120 in response to the viewing request from the user terminal device 120. As a result, the user can check the evaluation result for each evaluation step. As a result, it is possible to allow the user to clarify the evaluation step.

In addition, the transaction management server 100 according to the present embodiment transmits a confirmation notification based on a deviation between the expected information 521 (see FIG. 5) designated by the user and the input information input by the work staff to the user terminal device 120. As a result, the confirmation notification is issued in a case where there is a deviation between the expectation of the user and the opinion of the factory side, whereby it is possible to obtain the consent or the rejection pertaining to the deviation from the user. As a result, it is possible to suppress the occurrence of a discrepancy between the user and the recycling factory, and thus it is possible to improve the reliability of the transaction. In addition, since the user can be allowed to quickly check the deviation, it is possible to speed up the transaction.

In addition, the transaction management server 100 according to the present embodiment transmits a confirmation notification based on a deviation between the weighing result of the wet weight and the expected weight predicted by the user to the user terminal device 120. As a result, in a case where there is a deviation between the expected weight and the weighing result, the user can be allowed to check the deviation pertaining to the weighing by the confirmation notification, and it is also possible to obtain, from the user, the consent or the rejection pertaining to the deviation. As a result, it is possible to suppress the occurrence of a discrepancy between the user and the recycling factory, and thus it is possible to improve the reliability of the transaction. In addition, since the user can be allowed to quickly check the deviation pertaining to the weighing, it is possible to suppress the delay in the step after the weighing and to speed up the transaction.

In addition, the transaction management server 100 according to the present embodiment transmits a confirmation notification based on a deviation between the sampling method designated by the user and the sampling method designated by the work staff to the user terminal device 120. As a result, in a case where there is a deviation between the two sampling methods, the user can be allowed to check the deviation pertaining to the sampling method by the confirmation notification, and it is also possible to obtain, from the user, the consent or the rejection pertaining to the deviation. As a result, it is possible to suppress the occurrence of a discrepancy between the user and the recycling factory, and thus it is possible to improve the reliability of the transaction. In addition, since the user can be allowed to quickly check the deviation pertaining to the sampling method, it is possible to suppress the delay in the step after the sampling step and to speed up the transaction.

In addition, the transaction management server 100 according to the present embodiment transmits screen information including the imaging data (sampling video) of the recycled raw material, which has been captured by the work staff, in response to the viewing request from the user terminal device 120. As a result, the sampling step can be visualized by the sampling video 831. As a result, the user can check the sampling step with the sampling video 831.

### (Modification example of embodiment)

Hereinafter, a modification example of the embodiment will be described. It is noted that in the following modification example, the description of the contents described in the above-described embodiments will be omitted as appropriate. In the modification example, an example of visualizing a state of unpacking work of the recycled raw material received in the recycling factory will be described.

The recycled raw material is brought in the recycling factory such that the recycled raw material is brought in various forms. The form for bringing the recycled raw material in the recycling factory is, for example, a form in which the recycled raw material is accommodated in a container of a transport vehicle as it is, or a form in which the recycled raw material is packed in a bag (in a flexible container bag). The recycled raw material that has been brought in is unpacked after the weighing is completed. That is, the unpacking work is work carried out in a status of "weighed and under inspection" after "already arrived and waiting to be weighed". The unpacking work is carried out in units of lots.

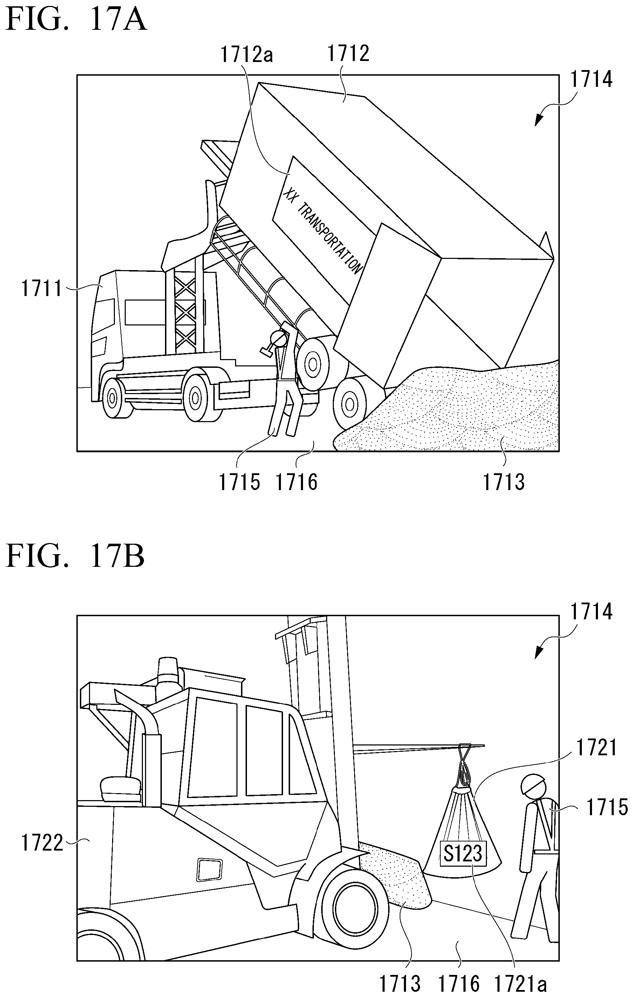

FIG. 17A is a view showing a state in a case where a recycled raw material is unpacked from a container of a transport vehicle. As shown in FIG. 17A, a transport vehicle 1711 includes a container 1712. For example, a logo 1712a (for example, "∘× transport") of a transport company that is grasped by the ask for transportation or the like by the user is described in the container 1712. A recycled raw material 1713 is accommodated in the container 1712 in a state where the recycled raw material 1713 is as it is.

The transport vehicle 1711 unpacks the container 1712 in an unpacking area 1714 in the recycling factory. The unpacking area 1714 includes a plurality of placement regions 1716. The plurality of placement regions 1716 are regions in which the recycled raw material 1713 of each of the users are capable of being placed. In a case where the transport vehicle 1711 arrives at the unpacking area 1714 in the recycling factory, the container 1712 is opened and inclined in a predetermined placement region 1716 in response to the operation of the work staff 1715. As a result, the recycled raw material 1713 in the container 1712 is discharged into a predetermined placement region in the unpacking area 1714.

FIG. 17B is a view showing a state in a case where a raw material is packed in a bag (in a flexible container bag) is unpacked. As shown in FIG. 17B, the flexible container bag 1721 is transported to the unpacking area 1714 by a forklift 1722. A predetermined flexible container bag number 1721a (for example, "S123") grasped by the packaging or the like by the user is described in the flexible container bag 1721. The flexible container bag number 1721a is associated with a lot number.

The forklift 1722 moves to the predetermined placement region 1716 in the unpacking area 1714 and unpacks the flexible container bag 1721. Specifically, in the predetermined placement region 1716, in a case where a part of the flexible container bag 1721 is cut by the work staff 1715 with a blade or the like, the recycled raw material 1713 in the flexible container bag 1721 is discharged into the predetermined placement region 1716. The state during the unpacking, which is shown in FIG. 17A and FIG. 17B, is captured by a predetermined imaging apparatus.

Next, an example of the installation of the imaging apparatus will be described.

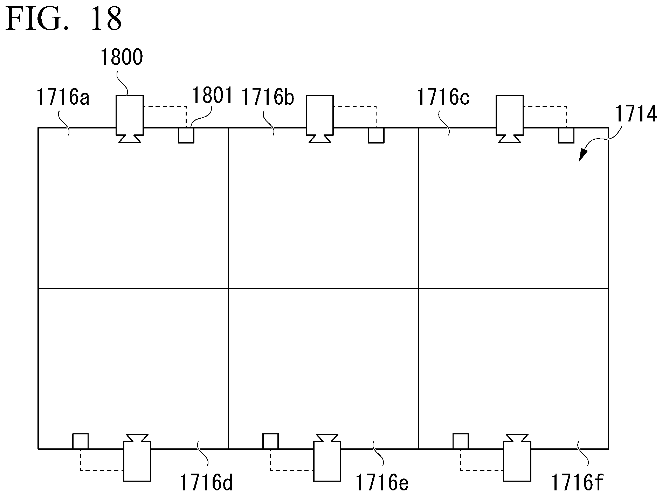

FIG. 18 is a view showing an example of the installation of an imaging apparatus in an unpacking area 1714. As shown in FIG. 18, an imaging apparatus 1800 is, for example, a plurality of fixed point cameras. The imaging apparatus 1800 is disposed to correspond to a plurality of placement regions 1716 (1716a to 1716f) in the unpacking area 1714, and for example, the number (for example, six) of the disposed imaging apparatuses 1800 is the same as the number of placement regions 1716. An image (hereinafter, referred to as an "unpacking image") captured by the imaging apparatus 1800 is, for example, a video. The imaging apparatus 1800 captures images of a series of operations from the time when the transport vehicle 1711 or the forklift 1722 enters the unpacking area 1714 to the time when the recycled raw material 1713 is discharged into the unpacking area 1714.

For example, an imaging button 1801 for activating each of the corresponding imaging apparatuses 1800 is disposed on a wall surface, a pillar, or the like in each of the plurality of placement regions 1716. For example, a work staff 1715 who carries out the unpacking work in the placement region 1716a presses the imaging button 1801 corresponding to the placement region 1716a before the unpacking work. As a result, the imaging apparatus 1800 corresponding to the placement region 1716 starts capturing of the unpacking image. In a case where the unpacking work is completed, the work staff 1715 presses the imaging button 1801 again. As a result, the imaging apparatus 1800 ends the capturing of the unpacking image.

It is noted that the imaging apparatus 1800 may change the imaging direction or may enlarge the image with a zoom lens. In addition, a plurality of imaging apparatus 1800 may be disposed at a plurality of different positions with respect to one placement region 1716. In this case, the unpacking images may be captured from a plurality of angles by a plurality of imaging apparatuses 1800.

In addition, the number of the imaging apparatuses 1800 disposed in the unpacking area 1714 may not be the same as the number of the placement regions 1716, and it may be, for example, a number smaller than the number of the placement regions 1716. In this case, the imaging apparatus 1800 changes the imaging direction or enlarges the image with a zoom lens in order to image each of the plurality of placement regions 1716. In a case where the work staff 1715 presses the imaging button 1801 corresponding to the placement region 1716, the imaging apparatus 1800 specifies the placement region 1716 indicated by the imaging button 1801, changes the direction toward the specified placement region 1716, and carries out the imaging while enlarging the image. Even in this way, the unpacking image in the placement region 1716 can be captured.

It is noted that in a case where the imaging button 1801 is pressed, a notification indicating that the imaging is waiting may be issued in a case where the imaging apparatus 1800 is in the middle of capturing the unpacking images in another placement region 1716. The notification may be configured to be carried out by a voice disposed in the unpacking area 1714 or a display unit (image or lamp) disposed on a wall surface or the like. In addition, the imaging apparatus 1800 is not limited to the fixed point camera and may be a camera (for example, a smartphone) owned by the work staff. In addition, the unpacking image is not limited to a video and may be a still image.

The captured unpacking image is stored in association with the date and time. The unpacking image is transmitted to the transaction management server 100 at a predetermined timing and is stored in the transaction management DB 101. In addition, the transaction management server 100 transmits the unpacking image to the user terminal device 120 in response to the viewing request of the user.

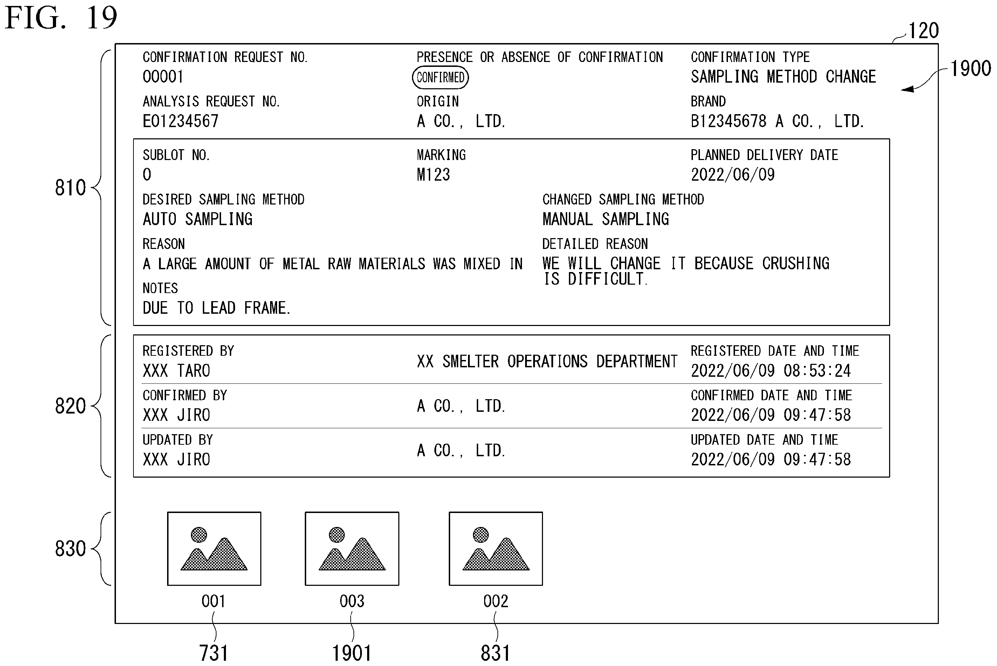

FIG. 19 is an explanatory view showing an example of a viewing screen including an unpacking image. A viewing screen 1900 shown in FIG. 19 is different from the viewing screen 800 shown in FIG. 8 in that an unpacking image 1901 is displayed in the imaging data region 830 in addition to the raw material image data 731 and the sampling video 831. The unpacking image 1901 may be a video that is played back as it is on the viewing screen 1900 or may be an icon for accepting the playback of the video.

The user can check the logo 1712a (for example, "xx transport") of the transport company of the flexible container bag number 1721a (for example, "S123") from the unpacking image 1901. As a result, the user can easily check whether or not the user's recycled raw material is suitably unpacked.

As described above, the transaction management server 100 according to Modification Example 1 registers the captured unpacking image in the transaction management DB 101 and transmits the screen information including the unpacking image to the user terminal device 120 in response to the viewing request from the user terminal device 120. As a result, the unpacking work can be visualized. Therefore, the reliability pertaining to the transaction of the recycled raw material can be further improved.

It is noted that all or some of the functions (input and output, storage, and processing) in the transaction management server 100 described above may be realized in a device different from the device described as the main entity that executes the functions. Specifically, in the above description, the configuration in which the transaction management server 100 includes the input information acquisition part 601, the update part 602, the transmission part 603, the extraction part 604, and the expected information acquisition part 605 has been described. However, all or some of these functional parts may be provided in another computer device. For example, all or some of these functional parts may be provided in the factory terminal device 110 or may be provided in another computer device. In addition, the computer device in which these functional parts are provided is not limited to a plurality of computer devices, and it may be one computer device. For example, all of these functional parts may be provided in one computer device.

It is noted that although the embodiments have been described, the specific configuration is not limited to the above-described embodiments, and design and the like within a range not departing from the scope of the present invention are also included.

A program for realizing the functions of the apparatus and the like (for example, the transaction management server 100, the factory terminal device 110, and the user terminal device 120) according to the above-described embodiment may be stored in a computer-readable storage medium, and the program stored in the storage medium may be read and executed by a computer system to carry out the processing. It is noted that the term "computer system" described herein may be such a computer system that includes hardware such as an operating system (OS) or peripheral devices. In addition, the term "computer-readable storage medium" refers to a storage device such as a writeable non-volatile memory such as a universal serial bus (USB) flash memory, a solid state drive (SSD), a flexible disk, a magneto-optical disk, a read only memory (ROM), or a flash memory, a portable medium such as a digital versatile disc (DVD), or a hard disk incorporated in a computer system.

Further, the term "computer-readable storage medium" is assumed to include, for example, a volatile memory (for example, a dynamic random access memory (DRAM)) inside an information processing apparatus or a computer system serving as a client in a case where a program is transmitted via a network such as the Internet or a communication line such as a telephone line, which holds the program for a certain period of time. In addition, the program may be transmitted to another computer system via a transmission medium or by a transmission wave in the transmission medium from a computer system in which such a program is stored in a storage device or the like. Here, the "transmission medium" that transmits the program refers to a medium having a function of transmitting information, such as a network (communication network) such as the Internet or a communication line such as a telephone line. In addition, the program described above may be a program for realizing some of the above-described functions. Further, the program described above may be a program that can realize the above-described functions in combination with a program already stored in the computer system, that is, a so-called difference file (difference program).

### [Reference Signs List]

1 Transaction management system
100 Transaction management server
101 Transaction management DB
110 Factory terminal device
120 User terminal device
201 CPU
202 Memory
203 Communication I/F
301 CPU
302 Memory
303 Input device
304 Communication I/F
305 Output device
601 Input information acquisition part
602 Update part
603 Transmission part
604 Extraction part
605 Expected information acquisition part
611 Request part
612 Reception part
613 Display control part

## Claims

1. A transaction management device comprising:
information acquisition means configured to acquire information on a progress status in each step including a content evaluation process of a transaction pertaining to a recycled raw material containing a valuable metal delivered by a user;
update means configured to update status information according to each step based on the information on the progress status; and
transmission means configured to transmit screen information including the status information to a user terminal device owned by the user, in response to a viewing request from the user terminal device.

2. The transaction management device according to Claim 1,
wherein the content evaluation process includes an evaluation step pertaining to evaluation of the recycled raw material,
the information on the progress status includes an evaluation result accepted in the evaluation step, and
the update means updates the status information in response to acquisition of the evaluation result by the information acquisition means.

3. The transaction management device according to Claim 2, further comprising:
registration means configured to register the evaluation result,
wherein the transmission means transmits the screen information including the evaluation result registered in the registration means to the user terminal device in response to the viewing request.

4. The transaction management device according to Claim 1 or 2, further comprising:
an expected information acquisition means configured to acquire expected information indicating an expectation pertaining to the transaction designated by the user,
wherein the information on the progress status includes input information pertaining to the transaction, the input information having been accepted from a work staff, and
the transmission means transmits a confirmation notification based on a deviation between the expected information and the input information to the user terminal device.

5. The transaction management device according to Claim 4,
wherein the expected information includes an expected weight of the recycled raw material designated by the user,
the content evaluation process includes a weighing step of weighing a weight of the recycled raw material,
the input information includes a weighing result in the weighing step, and
the transmission means transmits the confirmation notification based on a deviation between the expected weight and the weighing result to the user terminal device.

6. The transaction management device according to Claim 4,
wherein the content evaluation process includes a sampling step of sampling the recycled raw material,
the expected information includes information indicating one sampling method designated by the user among a plurality of sampling methods to be used in the sampling step,
the input information includes information indicating another sampling method different from the one sampling method, the another sampling method being designated by the work staff, and
the transmission means transmits the confirmation notification based on the one sampling method and the another sampling method to the user terminal device.

7. The transaction management device according to Claim 1 or 2,
wherein the content evaluation process includes a step of capturing an image of the recycled raw material,
registration means configured to register imaging data of the recycled raw material is provided, and
the transmission means transmits the screen information including the imaging data to the user terminal device in response to the viewing request from the user terminal device.

8. The transaction management device according to Claim 1 or 2,
wherein the content evaluation process includes at least any one step among a step of measuring a weight of the recycled raw material, a step of sampling the recycled raw material, and a step of analyzing a contained metal of the recycled raw material in a recycling factory.

9. A transaction management system comprising:
a transaction management device; and
a user terminal device provided by a customer,
wherein the transaction management device includes,
information acquisition means configured to acquire information on a progress status in each step including a content evaluation process of a transaction pertaining to a recycled raw material containing a valuable metal delivered by a user,
update means configured to update status information according to each step based on the information on the progress status, and
transmission means configured to transmit screen information including the status information to a user terminal device owned by the user, in response to a viewing request from the user terminal device, and
the user terminal device includes,
request means configured to make the viewing request,
reception means configured to receive the screen information from the transaction management device in response to the viewing request, and
display control means configured to cause a display unit to display the screen information received by the reception means.

10. A user terminal device comprising:
request means configured to make a viewing request for screen information to a transaction management device, the screen information including status information according to each step including a content evaluation process of a transaction pertaining to a recycled raw material containing a valuable metal delivered by a user, where the status information is updated based on information on a progress status in each step;
reception means configured to receive the screen information from the transaction management device in response to the viewing request; and
display control means configured to cause a display unit to display the screen information received by the reception means.

11. A transaction management method, for executing a process by a computer of a transaction management device, the process comprising:
an information acquisition step of acquiring information on a progress status in each step including a content evaluation process of a transaction pertaining to a recycled raw material containing a valuable metal delivered by a user;
an update step of updating status information according to each step based on the information on the progress status; and
a transmission step of transmitting screen information including the status information to a user terminal device owned by the user, in response to a viewing request from the user terminal device.

12. A display control method, for executing a process by a computer of a user terminal device, the process comprising:
a request step of making a viewing request for screen information to a transaction management device, the screen information including status information according to each step including a content evaluation process of a transaction pertaining to a recycled raw material containing a valuable metal delivered by a user, where the status information is updated based on information on a progress status in each step;
a reception step of receiving the screen information from the transaction management device in response to the viewing request; and
a display control step of causing a display unit to display the screen information received in the reception step.

13. A program that causes a computer to function as a transaction management device, the program causing the computer to function as:
information acquisition means configured to acquire information on a progress status in each step including a content evaluation process of a transaction pertaining to a recycled raw material containing a valuable metal delivered by a user;
update means configured to update status information according to each step based on the information on the progress status; and
transmission means configured to transmit screen information including the status information to a user terminal device owned by the user, in response to a viewing request from the user terminal device.

14. A program that causes a computer to function as a user terminal device, the program causing the computer to function as:
request means configured to make a viewing request for screen information to a transaction management device, the screen information including status information according to each step including a content evaluation process of a transaction pertaining to a recycled raw material containing a valuable metal delivered by a user, where the status information is updated based on information on a progress status in each step;
reception means configured to receive the screen information from the transaction management device in response to the viewing request; and
display control means configured to cause a display unit to display the screen information received by the reception means.
